# EUROPÄISCHE PATENTSCHRIFT

(11) **EP 2 768 725 B1**
(45) Veröffentlichungstag und Bekanntmachung des Hinweises auf die Patenterteilung: **20.02.2019**
(21) Anmeldenummer: 12775448.9
(22) Anmeldetag: 10.09.2012
(51) Int. Cl.: B63G 8/00, B63G 8/39, G01S 15/89

(54) **UNBEMANNTES UNTERWASSERFAHRZEUG UND VERFAHREN ZUM LOKALISIEREN UND UNTERSUCHEN EINES AM GEWÄSSERGRUND EINES GEWÄSSERS ANGEORDNETEN OBJEKTS SOWIE SYSTEM MIT DEM UNBEMANNTEN UNTERWASSERFAHRZEUG**
UNMANNED UNDERWATER VEHICLE AND METHOD FOR LOCALIZING AND EXAMINING AN OBJECT ARRANGED AT THE BOTTOM OF A BODY OF WATER AND SYSTEM HAVING THE UNMANNED UNDERWATER VEHICLE
VÉHICULE SOUS-MARIN SANS ÉQUIPAGE ET PROCÉDÉ DE LOCALISATION ET D'INSPECTION D'UN OBJET SITUÉ AU FOND DE L'EAU, ET SYSTÈME DOTÉ DU VÉHICULE SOUS-MARIN SANS ÉQUIPAGE

(30) Priorität: 20.10.2011 DE 102011116613
(43) Veröffentlichungstag der Anmeldung: 27.08.2014
(73) Patentinhaber: ATLAS ELEKTRONIK GmbH, 28309 Bremen (DE); Fraunhofer Gesellschaft zur Förderung der angewandten Forschung e.V., 80686 München (DE)
(72) Erfinder: CIERPKA, Kai, 28211 Bremen (DE); WALTL, Bernd, 28844 Weyhe (DE); KARIMANZIRA, Divas, 98693 Ilmenau (DE); JACOBI, Marco, 98693 Ilmenau (DE)
(74) Vertreter: thyssenkrupp Intellectual Property GmbH
(86) Internationale Anmeldenummer: PCT/EP2012/067623
(87) Internationale Veröffentlichungsnummer: WO 2013/056893

(56) Entgegenhaltungen:
- DE-B3-102006 045 686
- GB-A- 2 163 114
- US-A1- 2009 031 940
- US-A1- 2010 143 386
- US-B1- 6 854 410

## Beschreibung

Die Erfindung betrifft ein unbemanntes Unterwasserfahrzeug zum Lokalisieren und Untersuchen eines am Gewässergrund eines Gewässers angeordneten Objekts. Ferner betrifft die Erfindung ein entsprechendes Verfahren sowie ein System mit dem unbemannten Unterwasserfahrzeug.

Vorzugsweise ist das am Gewässergrund angeordnete Objekt eine Pipeline oder ein Seekabel, die bzw. das aufzuspüren, zu vermessen und ihrem bzw. seinem Verlauf folgend zu untersuchen ist. Mit der Erfindung können jedoch auch bspw. Minen aufgespürt werden. Unter einer Anordnung des Objekts am Gewässergrund ist vorliegend zu verstehen, dass das Objekt in direktem Kontakt zum Gewässergrund steht oder zumindest fest ggf. auch mittelbar, bspw. über Stützen, mit dem Gewässergrund verbunden ist. Dabei können Abschnitte des Objekts auf dem Gewässergrund aufliegen und/oder im Gewässergrund eingegraben bzw. von Sedimenten verschüttet sein und/oder freiliegen bzw. unterspült sein.

Zum Lokalisieren und Untersuchen eines derartigen Objekts ist es bekannt, das Objekt in einem ersten Schritt zu lokalisieren bzw. aufzuspüren und zu vermessen und in einem zweiten Schritt mittels Sensoren, bspw. mittels einer Kamera, zu untersuchen bzw. zu inspizieren. Zumindest zum Auffinden und Vermessen bzw. zum Lokalisieren des Objekts ist es bekannt, ein unbemanntes Unterwasserfahrzeug einzusetzen. Insbesondere ist es bekannt, ein autonomes Unterwasserfahrzeug (Autonomous Underwater Vehicle = AUV) oder ein kabelgebunden operierendes Unterwasserfahrzeug (Remotely Operated Vehicle = ROV) als unbemanntes Unterwasserfahrzeug zum Lokalisieren eines am Gewässergrund angeordneten Objektes einzusetzen.

Das AUV kann von einer Trägerplattform, insbesondere einem Trägerschiff, bspw. einem Versorgungsschiff, ausgesetzt werden, nachfolgend seine Mission selbstständig durchführen und danach wieder von der Trägerplattform geborgen bzw. aufgenommen werden. Der Versorgungsträger muss das AUV nicht begleiten, während dieses seine Mission durchführt. Jedoch kann das AUV dabei auch nicht vom Versorgungsträger mit elektrischer Energie versorgt werden, so dass seine Einsatzzeit durch die Speicherkapazität mitgeführter Akkumulatoren begrenzt ist. Das ROV ist mittels eines Kabels, über das es bspw. mit elektrischer Energie und/oder Steuerdaten versorgt wird, mit der Trägerplattform verbunden, die somit während des Lokalisierens bzw. während einer gesamten das Lokalisieren umfassenden Mission das Unterwasserfahrzeug begleiten muss. Ferner ist auch die Einsatzzeit des ROVs begrenzt, wenn es über sein Kabel nicht mit elektrischer Energie versorgt wird.

Zum Auffinden und Vermessen des Objekts weisen bekannte Unterwasserfahrzeuge ein Seitensichtsonar auf, das eine Sicht im Wesentlichen schräg zur Seite abwärts ermöglicht. Es ist daher bekannt, dem Verlauf einer einmal aufgefundenen Pipeline oder dem Verlauf eines anderen Objekts dadurch zu folgen und die Pipeline bzw. das Objekt dadurch zu vermessen, dass das Unterwasserfahrzeug mit einem seitlichen Querversatz über der Pipeline bzw. dem Objekt fährt.

Aufgrund von Meeresströmungen ist der Gewässergrund im Allgemeinen ständig in Bewegung, so dass Abschnitte des Objekts mit Sedimenten bedeckt bzw. eingegraben sein können. In diesem Fall können derartige eingegrabene Abschnitte des Objekts nicht mehr vom Seitensichtsonar erkannt werden. Bekannte Unterwasserfahrzeugen folgen daher einem vermuteten Objektverlauf und suchen dort das Objekt, was zeitaufwändig sein kann, insbesondere dann, wenn sich der vermutete Objektverlauf nicht mit dem tatsächlichen Objektverlauf, bspw. aufgrund eines seitlichen Abknickens der Pipeline, deckt.

Zum Untersuchen des lokalisierten Objekts ist es bekannt, eine manuelle Inspektion mittels Tauchern durchzuführen. Ferner ist es bekannt, das Objekt mittels eines weiteren ROVs oder AUVs oder auch mittels des zuvor zum Lokalisieren verwendeten ROVs oder AUVs durchzuführen. Dabei fährt das Unterwasserfahrzeug nochmals das nun lokalisierte Objekt ab, nun jedoch ohne Querversatz, um das Objekt aus geringer Entfernung, bspw. mittels einer Kamera direkt von oben, inspizieren zu können.

Das bekannte Verfahren zum Lokalisieren und Untersuchen eines am Gewässergrund eines Gewässers angeordneten Objekts weist somit mehrere Nachteile auf. Insbesondere kann in der begrenzten Einsatzzeitdauer des AUVs oder ROVs ohne fremde Energieversorgung aufgrund des doppelten Abfahrens zum Lokalisieren und Untersuchen sowie aufgrund des mitunter zeitaufwändigen Wiederauffindens hinter eingegrabenen Abschnitten während einer Mission nur ein stark begrenzter Bereich des Objekts tatsächlich lokalisiert und untersucht werden. Dabei ist auch zu berücksichtigen, dass insbesondere bei einem Einsatz in großen Tiefen allein das Abtauchen und wieder Auftauchen des Unterwasserfahrzeugs mit zunehmender Einsatztiefe einen zunehmend größeren Anteil an der limitierten Einsatzzeit des Unterwasserfahrzeugs ausmacht.

Die US 6,854,410 B1 beschreibt ein Unterwassererkundungssystem mit mehreren unbemannten Fahrzeugen zur Minenjagd, wobei die von den mehreren Unterwasserfahrzeugen aufgenommenen Sonar- und Bilddaten an ein Mutterschiff zur Auswertung übermittelt werden.

Die US 2009/0031940 A1 offenbart ein Unterwasserfahrzeug mit einer kugelförmigen Rahmenstruktur, auf welcher eine Vielzahl von Schallwandlern eines Schmalstrahlsonars angeordnet sind. Das Unterwasserfahrzeug navigiert selbsttätig in Labyrinth-Umgebungen und bewegt sich mittels Strahlruder in x- und y-Richtung fort.

Der Erfindung liegt nach alledem die Aufgabe zugrunde, das Lokalisieren und Untersuchen eines Objekts, insbesondere einer Pipeline und/oder eines Seekabels, am Gewässergrund zu verbessern.

Die Erfindung löst diese Aufgabe mit einem unbemannten Unterwasserfahrzeug nach Anspruch 1, mit einem System nach Anspruch 7 und mit einem Verfahren nach Anspruch 8.

Das unbemannte Unterwasserfahrzeug weist Objektlokalisierungsmittel zum Lokalisieren des Objekts und Objektsuntersuchungsmittel zum Untersuchen des Objekts auf. Darüber hinaus weist das autonome Unterwasserfahrzeug eine Sonareinrichtung mit 3D-Untergrundsonar zum Sammeln von Messdaten auf. Die Sonareinrichtung kann darüber hinaus weitere Sonare aufweisen. Die Objektlokalisierungsmittel sind ausgebildet zum räumlichen akustischen Lokalisieren sowohl von über als auch von unter der Gewässergrundoberfläche angeordneten lokalen Abschnitten des Objekts mittels zumindest dieser Messdaten, während das Unterwasserfahrzeug sich zugleich zum Untersuchen dieser oder benachbarter Abschnitte des Objekts mittels der Objektuntersuchungsmittel über diese lokalen Abschnitte hinwegbewegt. Diese Messdaten werden zumindest teilweise vom 3D-Untergrundsonar erzeugt. Das Unterwasserfahrzeug braucht daher dem Verlauf des Objekts nur einmal zu folgen und kann dabei zugleich das Objekt lokalisieren bzw. vermessen und untersuchen bzw. inspizieren. Dadurch kann gegenüber dem Stand der Technik in gleicher Zeit bzw. während einer Mission ein weitaus größerer Bereich des Objekts oder ein Objekt in einer kürzeren Zeit lokalisiert und untersucht werden.

Der Einsatz der Sonareinrichtung mit 3D-Untergrundsonar ermöglicht dabei das Lokalisieren des Objekts bei geringem seitlichen Querversatz des Unterwasserfahrzeugs relativ zu diesem Objekt beim Verfolgen des Objektverlaufs , insbesondere von einer Position, von der aus das Objekt in einem seitlichen Winkel von weniger als 20 Grad, bevorzugt weniger als 10 Grad, gegenüber der Senkrechten, die vom Unterwasserfahrzeug ausgeht, angeordnet ist. Das Lokalisieren des Objekts erfolgt mit verminderter Gefahr, das Objekt lokal zu verlieren und wieder neu auffinden zu müssen. Daher entfällt die Notwendigkeit des Standes der Technik, das Unterwasserfahrzeug in einem ersten Durchgang zum Lokalisieren und mit Querversatz und nachfolgend in einem zweiten Durchgang zum Untersuchen und ohne Querversatz zum Objekt zu bewegen.

Die Gefahr, das Objekt beim Folgen des Objektverlaufs zu verlieren wird dabei dadurch gemindert, dass die Sonareinrichtung mit 3D-Untergrundsonar es ermöglicht, lokale Abschnitte des Objekts unabhängig davon zu lokalisieren, ob diese lokalen Abschnitte unter der Gewässergrundoberfläche oder über der Gewässergrundoberfläche angeordnet sind.

Gemäß dem erfindungsgemäßen Verfahren sammelt die Sonareinrichtung mit dem 3D-Untergrundsonar Messdaten und ermitteln die Objektlokalisierungsmittel mittels dieser Messdaten die lokalen Abschnitte des Objekts räumlich akustisch, während sich das Unterwasserfahrzeug über diese lokalen Abschnitte des Objekts hinwegbewegt und zugleich die Objektuntersuchungsmittel das Objekt untersuchen, unabhängig davon, ob diese lokalen Abschnitte über oder unter Gewässergrundoberfläche angeordnet sind.

Das unbemannte Unterwasserfahrzeug ist in einer bevorzugten Ausführungsform für den vollständig autonomen Einsatz als AUV ausgebildet. Das als AUV ausgebildete Unterwasserfahrzeug ist gemäß einer Weiterbildung mit einem Datenlink (Hub) ausgestattet zum Bereitstellen von Daten online über den Datenlink. In einer weiteren Ausführungsform ist das Unterwasserfahrzeug ein ROV. Gemäß einer Weiterbildung der Erfindung ist das Unterwasserfahrzeug sowohl als AUV als auch als ROV einsetzbar und für beide Einsatzzwecke ausgerüstet. In diesem Fall kann das Unterwasserfahrzeug bspw. in flachen Gewässern kabelgebunden und in der Tiefsee vollständig autonom agieren.

Gemäß der Erfindung weist das unbemannte Unterwasserfahrzeug Objektverlauferkennungsmittel zum Erkennen des lokalen Objektverlaufs bzw. zum Erkennen von Strukturen des Objekts mittels der lokalisierten lokalen Abschnitte auf, unabhängig davon, ob diese lokalen Abschnitte aufliegend, eingegraben oder freiliegend sind. Dabei sei angenommen, dass das Objekt eine Größe bzw. einen Durchmesser von 0,05 bis 0,25 Meter für ein Seekabel bzw. 0,60 bis 0,81 Meter für eine Pipeline hat und vorzugsweise zudem ein ferromagnetisches Material aufweist. Die Pipeline ist dabei maximal 2 Meter tief im Meeresgrund eingegraben. Das Seekabel darf entsprechend seiner geringeren Dicke weniger tief, bspw. bis zu 0,5 Meter oder bis zu 1 Meter tief, eingegraben sein. Verfahrensgemäß erkennen die Objektverlauferkennungsmittel mittels der lokalisierten Abschnitte den lokalen Objektverlauf des Objekts unabhängig davon, ob die lokalisierten Abschnitte aufliegend, eingegraben oder freiliegend sind. Dadurch wird dem entgegengewirkt, dass das Unterwasserfahrzeug, während es dem Objektverlauf folgt, das Objekt bzw. Abschnitte des Objekts zeitweilig verliert und wieder neu auffinden muss.

Gemäß der Erfindung weist das unbemannte Unterwasserfahrzeug Objektverlaufverfolgungsmittel zum Anpassen der Trajektorie des Unterwasserfahrzeugs mittels des erkannten Objektverlaufs derart auf, dass ein Querversatz der Trajektorie relativ zum erkannten Objektverlauf möglichst gering, insbesondere unter einem bestimmten Grenzwert, und/oder möglichst konstant, insbesondere bei einer unter einem bestimmten Grenzwert liegenden Abweichung von einem konstanten Querversatz, gehalten wird. Dadurch ermöglicht es die Erfindung, dem Objektverlauf im Wesentlichen querversatzlos, insbesondere mit einem horizontalen Querversatz von weniger als einen halben Meter, bzw. bei einem im Wesentlichen konstanten Querversatz, bspw. von einem halben Meter, zu folgen, so dass ein Untersuchen des Objekts bereits im selben Durchgang bzw. bereits während des Lokalisierens des Objekts möglich ist.

Das unbemannte Unterwasserfahrzeug weist bevorzugt ein Multisensorsystem auf. Dieses Multisensorsystem weist als einen ersten Sensor das 3D-Untergrundsonar auf. Darüber hinaus weist das Multisensorsystem wenigstens einen weiteren Sensor auf. Alle diese Sensoren sind ausgebildet zum Sammeln von Messdaten zum Lokalisieren und/oder zum Untersuchen des Objekts mittels dieser Messdaten. Die weiteren Sensoren umfassen wenigstens eine Kamera, ein Seitensichtsonar, ein Mehrstrahlsonar, ein Frontsichtsonar und/oder wenigstens einen Magnetsensor bzw. Gradiametersonden und/oder ein Magnetometer, insbesondere Vektormagnetometer, einer Magnetfelddetektionseinrichtung. Verfahrensgemäß verknüpft das Multisensorsystem die Messdaten von wenigstens zwei der Sensoren des Multisensorsystems miteinander bzw. fusioniert diese Messdaten. Die Objektlokalisierungsmittel erkennen und/oder untersuchen mittels der verknüpften bzw. fusionierten Messdaten das Objekt. Vorzugsweise werden Messdaten wenigstens eines optischen, wenigstens eines akustischen und wenigstens eines magnetischen Sensors miteinander verknüpft bzw. fusioniert, insbesondere zum Lokalisieren des Objekts, besonders bevorzugt zum Verfolgen des Objektverlaufs.

Die Verknüpfung der Messdaten ermöglicht die autonome Arbeitsweise beim Lokalisieren mit höchster Präzision und beim Untersuchen des Objekts und sorgt dabei für eine hohe Verlässlichkeit der Ergebnisse. Insbesondere werden Fehler bei der Interpretation von Messdaten minimiert, indem die Messdaten von unterschiedlichen Sensoren herangezogen werden.

Die Kamera ermöglicht dabei eine optische Inspektion des Objekts, so dass zur Untersuchung bspw. äußere Beschädigungen am Objekt erkannt werden können. Zugleich können die optischen Sensordaten der Kamera auch zum Erkennen des Objektverlaufs und/oder zum Erkennen von Unterspülungen ausgewertet werden.

Das Seitensichtsonar ermöglicht nicht nur ein erstes Auffinden der Pipeline, sondern ebenso wie das Mehrstrahlsonar eine Untersuchung der Umgebung des Objekts. Dadurch kann insbesondere der Objektverlauf relativ zur Umgebung besser eingeschätzt werden. Das Frontsichtsonar ermöglicht insbesondere ein frühzeitiges Erkennen eines evtl. Knicks im Objektverlauf und das Detektieren evtl. Hindernisse.

Vorzugsweise werden Hindernisse der wünschenswerten Trajektorie des Unterwasserfahrzeugs über dem Objektverlauf nicht seitlich umfahren, sondern durch ein Ausweichen in vertikaler Richtung nach oben überfahren. Dadurch wird ein lückenloses Lokalisieren und Untersuchen des Objekts begünstigt. Schließlich wird das Objekt, insbesondere die Pipeline, wenn es ein ferromagnetisches Material aufweist, vorteilhaft mittels der Magnetsensoren bzw. mittels des Magnetometers der Gradiometersonden aufgespürt. Auch der Verlauf des Objekts kann vorteilhaft, insbesondere in Verbindung mit dem 3D-Untergrundsonar, unterstützend von der Magnetfelddetektionseinrichtung erkannt werden. Das Magnetometer kann ein passives und/oder ein aktives Magnetometer sein, wobei im Falle der Ausbildung als aktives Magnetometer eine Einrichtung zur Erzeugung eines Magnetfelds am Unterwasserfahrzeug vorgesehen ist.

Vorzugsweise ist das Multisensorsystem zum Sammeln von Messdaten ausgebildet, die geeignet sind zum Vermessen der lokalen Gewässergrundoberfläche unter dem Unterwasserfahrzeug, zum Erkennen der Lage der detektierten lokalen Abschnitte des Objekts relativ zur lokalen Gewässergrundoberfläche und zum Klassifizieren mittels der erkannten Lage, ob es sich bei den lokalen Abschnitten um aufliegende, um eingegrabene oder um freiliegende, insbesondere unterspülte, Abschnitte des Objekts handelt. Verfahrensgemäß werden entsprechende Messdaten gesammelt. Es werden somit sowohl das Objekt als auch die Umgebung der Gewässergrundoberfläche vermessen, wobei die dabei gesammelten Messdaten einer gemeinsamen Auswertung zugeführt werden und dadurch die Interpretation ermöglichen, wie die einzelnen Sensordaten zu werten sind und ob die detektierten lokalen Abschnitte des Objekts auf dem Gewässergrund aufliegen, im Gewässergrund eingegraben sind oder freiliegen. Bspw. ist das Objekt optisch mittels der Kamera nicht sichtbar, kann jedoch mittels des 3D-Untergrundsonars in einer bestimmten Tiefe geortet werden. Der Abstand des Untergrunds zum Unterwasserfahrzeug kann dabei bspw. mittels des Mehrstrahlsonars erfasst werden.

Vorteilhafterweise weist das unbemannte Unterwasserfahrzeug Navigationsmittel auf, die Navigationsdaten bereitstellen zum selbstständigen Navigieren des Unterwasserfahrzeugs. Diese werden vorzugsweise zum Ermitteln der jeweiligen Position des jeweils lokalisierten Abschnitts des Objekts und zum Zuordnen von Messdaten zu dieser jeweiligen Position verwendet. Die Navigationsmittel ermöglichen ein hochpräzises Navigieren zunächst von der Wasseroberfläche zu einer Abtauchposition, in dessen Umgebung das Objekt vermutet wird. Weiter ermöglichen die Navigationsmittel das hochpräzise Verfolgen des Objektverlaufs und das Zuweisen von Koordinaten zu Abschnitten des Objekts bzw. das Lokalisieren von Abschnitten des Objekts. Hierfür weisen die Navigationsmittel mehrere Navigationseinrichtungen zum Ermitteln der Navigationsdaten auf:
Vorzugsweise weist das unbemannte Unterwasserfahrzeug bzw. weisen die Navigationsmittel einen Stampfsensor auf zum Ermitteln der Rotationsbewegung des Unterwasserfahrzeugs um seine Querachse. Dadurch kann die Operationstiefe des Unterwasserfahrzeugs beibehalten sowie in Verbindung mit weiteren Sensoren, insbesondere zur Ermittlung der Geschwindigkeit, die Abtauchgeschwindigkeit bzw. Auftauchgeschwindigkeit des Unterwasserfahrzeugs ermittelt werden.

Weiter ist vorzugsweise ein Rollsensor als ein Navigationsmittel vorgesehen zum Ermitteln der Rotationsbewegung des Unterwasserfahrzeugs um seine Längsachse. Dies hilft dabei, ein seitliches Wegkippen zu erkennen bzw. das Unterwasserfahrzeug gegen ein seitliches Wegkippen zu stabilisieren.

Ferner weist das unbemannte Unterwasserfahrzeug bzw. weisen die Navigationsmittel vorzugsweise einen Magnetkompass zum Ermitteln der Richtung und Orientierung des Unterwasserfahrzeugs relativ zu den Feldlinien des Erdmagnetfelds auf. Dadurch ist eine Kursbestimmung im Wasser möglich.

Vorzugsweise umfassten die Navigationsmittel ein Dosenbarometer oder ein anderes Barometer zum Ermitteln des Wasserdrucks in der Tiefe des Unterwasserfahrzeugs unter der Wasseroberfläche, wobei der Wasserdruck ermittelt wird, um anhand des ermittelten Wasserdrucks die Tiefe bestimmen zu können. Insbesondere beim Abtauchen oder beim Auftauchen ermittelt das unbemannte Unterwasserfahrzeug mittels des Navigationssystems bzw. mittels des Dosenbarometers selbstständig die aktuelle Tauchtiefe.

Ferner navigiert das unbemannte Unterwasserfahrzeug, insbesondere während des Abtauchens, bevorzugt mit Hilfe eines sog. "Ultra Short Baseline" Unterwassernavigationssystems, wobei die Navigationsmittel eine Einrichtung dieses Unterwassernavigationssystems aufweisen, die mit wenigstens einer weiteren Einrichtung Laufzeitmessungen zwischen dieser Einrichtung und der weiteren Einrichtung durchführt und diese Laufzeitmessungen zur Positionsbestimmung heranzieht. Die weitere Einrichtung kann bspw. am Meeresgrund positioniert werden, wobei diese Position zumindest während des Navigierens ortsfest ist. Ferner kann die weitere Einrichtung auch an der Trägerplattform oder an einem anderen Schiff befestigt sein. Das Unterwassernavigationssystem ermöglicht eine Positionsbestimmung des Unterwasserfahrzeugs, insbesondere während des Abtauchens, mit hoher Genauigkeit.

Vorzugsweise umfassen die Navigationsmittel wenigstens einen Wasserschallgeschwindigkeitssensor zum Ermitteln der Schallgeschwindigkeit im Wasser, insbesondere zur Unterstützung der Navigation mittels Laufzeitmessungen.

Weiter weisen die Navigationsmittel des unbemannten Unterwasserfahrzeugs vorzugsweise einen sog. Transponder und/oder einen sog. Responder auf. Der Transponder und der Responder sind Einrichtungen, die Signale empfangen und in Erwiderung darauf Signale zurücksenden. Der Transponder ist dabei eine bewegliche Einrichtung, wohingegen der Responder eine ortsfeste Einrichtung ist. Der Transponder und/oder der Responder ermöglichen Laufzeitmessungen, die bspw. ausgehend von der Trägerplattform durchgeführt werden. Ergebnisse dieser Laufzeitmessungen können dann von der Trägerplattform an das autonome Unterwasserfahrzeug, bspw. mittels Wasserschallsignalen, übermittelt werden.

Vorzugsweise weist das unbemannte Unterwasserfahrzeug bzw. weisen die Navigationsmittel einen Ultraschall-Doppler-Profil-Strömungsmesser zum Ermitteln der Wasserströmung relativ zum Unterwasserfahrzeug auf. Verfahrensmäßig wird damit die Wasserströmung relativ zum Unterwasserfahrzeug ermittelt und vorzugsweise zur Steuerung des Unterwasserfahrzeugs herangezogen, so dass bspw. einem Abdriften des Unterwasserfahrzeugs von einem vorgesehenen Kurs entgegengewirkt werden kann.

Vorzugsweise umfassen die Navigationsmittel Beschleunigungssensoren zum Ermitteln der Beschleunigung des Unterwasserfahrzeugs, insbesondere in einem inertialen, insbesondere mittels des Unterwasserfahrzeugs gegebenen, Bezugssystem. Damit wird ein inertiales Navigieren bzw. ein Navigieren auch ohne Bezug zur Außenwelt unterstützt.

Darüber hinaus weisen die Navigationsmittel vorzugsweise eine Messsonde zum Ermitteln des Salzgehalts und/oder zum Ermitteln der Temperatur des umgebenden Wassers und/oder zum Ermitteln der Tiefe der Messsonde unter der Wasseroberfläche auf. Die Messsonde ermittelt entsprechend den Salzgehalt und/oder die Temperatur und/oder die Tiefe der Messsonde unter der Wasseroberfläche und stellt entsprechende Messergebnisse bereit. Diese Messergebnisse werden bevorzugt beim Ermitteln von Messergebnissen der übrigen Einrichtungen oder bei deren Interpretation verwendet, da Messungen mit den übrigen Einrichtungen bzw. Messergebnisse zumindest teilweise bspw. vom Salzgehalt des umgebenden Wassers abhängig sind.

Vorzugsweise umfassen die Navigationsmittel ferner eine Empfangseinrichtung zum Empfangen von Satellitensignalen eines satellitengestützten Navigationssystems, bspw. des Global Positioning Systems (GPS). Das satellitengestützte Navigationssystem wird zum Ermitteln der Position des Unterwasserfahrzeugs mittels dieser Satellitensignale verwendet, insbesondere dann, wenn sich das Unterwasserfahrzeug an der Oberfläche des Gewässers befindet, an der es diese Satellitensignale empfangen kann. An der Oberfläche des Gewässers ermöglicht das satellitengestützte Navigationssystem eine sehr genaue Positionsbestimmung, bspw. vor dem Abtauchen. Untergetaucht wird mittels eines oder mittels mehreren der übrigen Einrichtungen weiter navigiert, was jedoch vorzugsweise zumindest derart genau durchführbar ist, dass bei einer Abtauchtiefe von 1500 Metern ein Abtauchfehler von maximal 10 Metern erreicht wird. Vorzugsweise wird eine Navigationsgenauigkeit von 0,1 Prozent des beim Abtauchen zurückgelegten Weges relativ zur Startposition erreicht.

Ferner weisen die Navigationsmittel vorzugsweise einen Trübungssensor zum Ermitteln der Trübung des umgebenden Wassers auf. Die vom Trübungssensor ermittelte Trübung wird vorzugsweise bei der Verwendung weiterer Messergebnisse berücksichtigt, ähnlich den Messergebnissen der Messsonde zum Ermitteln des Salzgehalts. Auch die Trübung kann nämlich Messergebnisse verfälschen oder ein optisches Navigieren sogar unmöglich machen, was somit berücksichtigt werden kann.

Vorzugsweise berücksichtigen die Navigationsmittel Wissen über den Verlauf des Objekts, bspw. einen geraden oder gekrümmten Verlauf des Objekts, bei der Navigation. Das Wissen ist gespeichertes Vorwissen oder ein mittels Sensoren detektiertes Wissen.

Vorzugsweise umfassen die Navigationsmittel ferner eine Navigationselektronik bzw. Algorithmen zur Bildverarbeitung und/oder zur Bereitstellung künstlicher Intelligenz und/oder zur Bereitstellung statistischer Signalverarbeitung, wobei die Navigationselektronik damit die Navigation unterstützt, insbesondere ein präzises Navigieren ermöglicht.

Das unbemannte Unterwasserfahrzeug weist vorzugsweise eine einheitliche bzw. generische Datenschnittstelle bzw. Sensorschnittstelle für die verschiedenen Sensoren und/oder für die verschiedenen Einrichtungen, insbesondere Navigationseinrichtungen, derart auf, dass wahlweise unterschiedliche Sensoren bzw. Einrichtungen über diese Datenschnittstelle angeschlossen und zum Lokalisieren und/oder zum Untersuchen des Objekts eingesetzt werden können. Auf diese Weise ist es möglich, das Unterwasserfahrzeug für verschiedene Einsatzzwecke mit einer unterschiedlichen Anzahl von Sensoren oder auch mit unterschiedlichen Sensoren bzw. Einrichtungen auszurüsten, ohne hierfür eine unterschiedliche Recheneinrichtung oder Steuerelektronik vorsehen oder andere aufwändige Anpassungen vornehmen zu müssen. Verfahrensgemäß werden Messdaten von wenigstens einem der Sensoren bzw. Einrichtungen, insbesondere nach einer Neukonfiguration des Unterwasserfahrzeugs oder wenn Sensoren keine oder als falsch erkannte Messdaten liefern, alternativ oder zusätzlich zu den Messdaten wenigstens eines anderen der Sensoren bzw. Einrichtungen zum Lokalisieren und/oder zum Untersuchen herangezogen. Diese jeweiligen Messdaten werden über die jeweils einheitliche Datenschnittstelle übertragen, so dass die Sensoren bzw. Einrichtungen redundant verwendet werden können. Insbesondere wird somit eine funktionelle Redundanz beim Navigieren und/oder beim Verfolgen und/oder beim Untersuchen des Objekts ermöglicht.

Für die Kommunikation weist das unbemannte Unterwasserfahrzeug vorzugsweise Kommunikationsmittel auf, die zur Kommunikation Signale und/oder Informationen empfangen und/oder senden. Dabei umfassen die Kommunikationsmittel vorzugsweise eine akustische Unterwasserkommunikationseinrichtung und/oder eine Satellitenkommunikationseinrichtung und/oder eine WLAN (Wireless Local Area Networt)-Kommunikationseinrichtung und/oder eine Netzwerkeinrichtung und/oder eine Funkverbindungseinrichtung.

Die akustische Unterwasserkommunikationseinrichtung kommuniziert akustisch mittels Wasserschallsignalen bzw. mit einer weiteren Unterwasserkommunikationseinrichtung, die an der Trägerplattform angeordnet ist. Die Satellitenkommunikationseinrichtung kommuniziert über Funk über wenigstens einen Satelliten. Die WLAN-Kommunikationseinrichtung ermöglicht ebenfalls eine Kommunikation über Funk, jedoch lediglich in näherer Umgebung, über ein drahtloses lokales Netzwerk, bspw. um Messdaten nach Missionsende drahtlos vom Unterwasserfahrzeug an eine stationäre Einrichtung zu übertragen. Dieses Übertragen der Messdaten kann auch mittels der Netzwerkeinrichtung erfolgen, die eine elektrische Kommunikation über ein kabelgebundenes Netzwerk ermöglicht. Auch eine Übertragung von Messdaten während der Durchführung einer Mission ist möglich, insbesondere wenn das Unterwasserfahrzeug als ROV ausgebildet ist. Schließlich ermöglicht die Funkverbindungseinrichtung eine Kommunikation über Funk unter Nutzung eines Sendeverfahrens, das Übertragungsverluste durch Erkennen und wiederholtes Senden unvollständig übertragener Datenpakete minimiert, bspw. des sog. "Radio Link Protocols" (RLP).

Vorzugsweise weist das 3D-Untergrundsonar mehrere, insbesondere in Reihe angeordnete, Wasserschallwandler und eine synthetische Apertur zum Aufspannen einer das räumliche Lokalisieren des Objekts ermöglichenden Beobachtungsebene mittels wiederholt ermittelter Sensordaten der Wasserschallwandler auf. Dadurch wird die Bewegung des Unterwasserfahrzeugs ausgenutzt, um die Anzahl physikalisch vorzusehender Wasserschallwandler zu minimieren.

Vorzugsweise weist das unbemannte Unterwasserfahrzeug wenigstens einen gegenüber der Längsachse des Unterwasserfahrzeugs schwenkbaren Sensorträger auf. An diesem Sensorträger sind die Wasserschallwandler in mehreren jeweils gegenüber einem gemeinsamen Bezugspunkt auf der Längsachse unterschiedlichen Abständen zumindest in ihrer Mehrzahl befestigt. Einzelne Wasserschallwandler können bspw. direkt am Rumpf des Unterwasserfahrzeugs befestigt sein. Insbesondere sind die Wasserschallwandler in mehreren unterschiedlichen Abständen gegenüber der jeweiligen Schwenkachse des jeweiligen Sensorträgers befestigt. Die Schwenkachse kann dabei eine materiell ausgebildete oder eine gedachte Achse sein, die entweder fest am Unterwasserfahrzeug fixiert oder auch selbst, insbesondere während des Einfahrens oder Ausfahrens des Sensorträgers, verschoben bzw. verschwenkt werden kann.

Das Unterwasserfahrzeug kann somit mit eingeschwenkten Sensorträgern seine Startposition in seiner Missionstiefe ansteuern, so dass die Sensorträger der Bewegung und dem Manövrieren im Wasser während des Abtauchens keinen unnötigen Widerstand entgegensetzen. Verfahrensgemäß schwenkt das Unterwasserfahrzeug vor Beginn der Messungen wenigstens einen Sensorträger gegenüber der Längsachse des Unterwasserfahrzeugs. Insbesondere schwenkt das Unterwasserfahrzeug den Sensorträger aus. Die Wasserschallwandler sind hiernach über eine Breite von vorzugsweise mindestens zwei Metern angeordnet und vorzugsweise gleichmäßig auf dieser Breite verteilt. Nachfolgend werden wiederholt Sensordaten ermittelt, wobei die zu unterschiedlichen Zeitpunkten ermittelten Sensordaten wie an unterschiedlichen Orten ermittelte Sensordaten betrachtet werden, was unter Berücksichtung der Eigenbewegung des Unterwasserfahrzeugs und unter der Annahme, dass der Gewässergrund zumindest während dieser kurzen Zeitdauer im Wesentlichen unverändert bleibt, möglich ist. Damit wird die sog. synthetische Apertur aufgespannt. Mittels dieser synthetischen Apertur ist es möglich, den Untergrund dreidimensional zu erfassen.

In einer vorteilhaften Weiterbildung sind die Wasserschallwandler, die diese Sensordaten ermitteln, asymmetrisch zur Längsachse des Unterwasserfahrzeugs derart angeordnet, dass die Mitte eines mittels dieser Wasserschallwandler abtastbaren Abtastbereichs einen Querversatz, vorzugsweise von wenigstens einem halben Meter, zur Längsachse des Unterwasserfahrzeugs aufweist. Ggf. können die physikalisch am Sensorträger befestigten Wasserschallwandler dabei symmetrisch zur Längsachse des Unterwasserfahrzeugs sein, wobei lediglich nicht von allen diesen Unterwasserschallwandlern Sensordaten zum Lokalisieren des Objekts herangezogen werden. Die asymmetrische Anordnung ermöglicht ein verbessertes Lokalisieren direkt unter dem Unterwasserfahrzeug bzw. im Bereich des Objekts.

Vorzugsweise sind am Sensorträger mit den Wasserschallwandlern oder an einem anderen Sensorträger oder Ausleger Magnetsensoren zum Auffinden des Objekts befestigt, wobei das Auffinden des Objekts mittels Detektieren von magnetischen Anomalien erfolgt, die vom Objekt bewirkt werden. Das Objekt, insbesondere die Pipeline bzw. das Seekabel, weist ein ferromagnetisches Material auf, das mittels der Magnetsensoren detektiert wird, auch wenn das Objekt im Untergrund eingegraben ist. Die Magnetsensoren erleichtern das Auffinden des Objekts, können jedoch auch alleine oder unterstützend das Verfolgen des Objekts bzw. Objektverlaufs ermöglichen.

Das unbemannte Unterwasserfahrzeug weist vorzugsweise eine Steuereinrichtung auf. Die Steuereinrichtung ist ausgebildet zum Manövrieren des Unterwasserfahrzeugs in eine durch eine Abtauchposition definierte Operationstiefe. Weiter ist die Steuereinrichtung ausgebildet zum Manövrieren des Unterwasserfahrzeugs nach Erreichen der Operationstiefe zur Abtauchposition. Ferner ist die Steuereinrichtung ausgebildet zum Durchführen einer Suchroutine nach Erreichen der Abtauchposition, wobei verfügbares Vorwissen über die Lage des Objekts von der Suchroutine berücksichtigt wird. Schließlich ist die Steuereinrichtung ausgebildet zum Berechnen und Abfahren einer Anfahrtrajektorie zu einer in Abhängigkeit von der ermittelten Lage des Objekts definierten Startposition und zum Folgen der über einem ermittelten Objektverlauf liegenden Trajektorie. Die Steuereinrichtung weist jeweils Mittel für diese Zwecke auf.

Verfahrensgemäß wird vorzugsweise mittels einer Missionsplanungseinrichtung zunächst eine Mission geplant. In einer Weiterbildung der Erfindung wird dabei Vorwissen über die Lage des Objekts berücksichtigt. Die Missionsplanungseinrichtung erzeugt für die Durchführung der Mission geeignete Steuerdaten die an das Unterwasserfahrzeug über Funk, über eine kabelgebundene Verbindung oder mittels eines Datenspeichers, der am Unterwasserfahrzeug angeschlossen wird, übertragen werden. Nachfolgend, insbesondere nach einem zu Wasser lassen des Unterwasserfahrzeugs, navigiert das Unterwasserfahrzeug selbstständig und führt selbstständig navigierend ein Abtauchmanöver durch. Dabei manövriert das Unterwasserfahrzeug vorzugsweise in die durch die Abtauchposition definierte Operationstiefe, wobei es vorzugsweise wiederholt oder fortlaufend seine Position ermittelt. Insbesondere erfolgt die Positionsermittlung während des Abtauchens mittels des oben bereits genannten "Ultra Short Baseline"-Systems. Dabei wird die Position des Unterwasserfahrzeugs vom Oberflächenschiff ermittelt und an das Unterwasserfahrzeug übermittelt.

Nach Erreichen der Operationstiefe führt das Unterwasserfahrzeug vorzugsweise ein sog. "Navigations-Alignment-Navigationsmanöver" zum Erreichen der Abtauchposition durch. Dabei wird ein evtl. Abtauchfehler, der mittels Sensoren bzw. Navigationseinrichtungen festgestellt wird, kompensiert.

Vorzugsweise führt das Unterwasserfahrzeug nachfolgend eine Suchroutine durch, bei der das Objekt gesucht wird. Insbesondere fährt das Unterwasserfahrzeug mäanderförmig zum Auffinden des Objekts in einem definierten Abstand über dem Gewässergrund. Falls Vorwissen über die Lage des Objekts verfügbar ist, wird dieses Vorwissen vorzugsweise beim Durchführen der Suchroutine berücksichtigt. Nach dem Auffinden des Objekts wird eine Anfahrtrajektorie zu einer Startposition berechnet und vom Unterwasserfahrzeug abgefahren. Vorzugsweise ermittelt das Unterwasserfahrzeug nachfolgend wiederholt den Objektverlauf und folgt dabei dem ermittelten Objektverlauf auf seiner darüberliegenden Trajektorie. Dabei untersucht das Unterwasserfahrzeug zugleich das Objekt und legt beim Untersuchen sensierte Messdaten, insbesondere der Sensoren, jedoch vorzugsweise auch der Navigationseinrichtungen, in einem Speicher ab und/oder übermittelt diese Messdaten über ein Kabel bspw. an die Trägerplattform. Die im Speicher abgelegten Messdaten werden, insbesondere nach Missionsende, ausgelesen und ausgewertet. Dabei werden die Messdaten vorzugsweise dahingehend ausgewertet, dass klassifiziert wird, ob Abschnitte des Objekts aufliegende, eingegrabene oder freiliegende, insbesondere unterspülte, Abschnitte sind. Alternativ oder zusätzlich wird mittels der Messdaten der Zustand des Objekts bestimmt. Das Klassifizieren und das Bestimmen des Zustands erfolgt vorzugsweise vollständig oder zumindest weitgehend automatisch.

Das erfindungsgemäße System weist das autonome Unterwasserfahrzeug sowie eine Missionsplanungseinrichtung zum Erzeugen der Steuerdaten zur Steuerung der Mission auf. Ferner weist das System eine Steuerdatenübertragungseinrichtung zur Übertragung der Steuerdaten von der Missionsplanungseinrichtung zum Unterwasserfahrzeug auf. Weiter weist das System eine Messdatenausleseeinrichtung zum Auslesen von während der Mission gespeicherten Messdaten und eine Messdatenauswerteeinrichtung zum Klassifizieren von Abschnitten des Objekts als aufliegende, eingegrabene oder freiliegende Abschnitte und/oder zur Bestimmung des Zustands des Objekts auf.

Weitere Ausführungsformen ergeben sich aus den Ansprüchen sowie aus den anhand der Zeichnung näher erläuterten Ausführungsbeispielen. In der Zeichnung zeigen:
- Fig. 1: ein autonomes Unterwasserfahrzeug gemäß einem ersten Ausführungsbeispiel der Erfindung in vereinfachter schematischer Darstellung in einer Ansicht von unten;
- Fig. 2: ein autonomes Unterwasserfahrzeug gemäß einem zweiten Ausführungsbeispiel der Erfindung in vereinfachter schematischer Darstellung in einer Ansicht von unten;
- Fig. 3: ein System mit einem autonomen Unterwasserfahrzeug gemäß einem dritten Ausführungsbeispiel der Erfindung in vereinfachter schematischer Darstellung in einer Seitenansicht;
- Fig. 4: das autonome Unterwasserfahrzeug gemäß dem ersten Ausführungsbeispiel von Fig. 1 in einer Anordnung beim Lokalisieren und Untersuchen einer Pipeline in einer Seitenansicht;
- Fig. 5: das autonome Unterwasserfahrzeug gemäß dem ersten Ausführungsbeispiel von Fig. 1 in einer Anordnung beim Abtauchen mit seiner Trajektorie in einer Seitenansicht;
- Fig. 6: das autonome Unterwasserfahrzeug gemäß dem ersten Ausführungsbeispiel von Fig. 1 in einer Anordnung beim Lokalisieren und Untersuchen einer Pipeline mit der zurückgelegten Trajektorie zum Einnehmen einer Abtauchposition, zum Suchen der Pipeline, zum Anfahren einer Startposition und beim Verfolgen des Verlaufs der Pipeline einer Draufsicht;
- Fig. 7: eine schematische Darstellung von Verfahrensschritten beim Lokalisieren und Untersuchen eines am Gewässergrund eines Gewässers angeordneten Objekts gemäß einem Ausführungsbeispiel der Erfindung;
- Fig. 8: eine schematische Darstellung eines Verfahrens zum Lokalisieren und Untersuchen eines am Gewässergrund eines Gewässers zugeordneten Objekts gemäß einem Ausführungsbeispiel der Erfindung;
- Fig. 9: Verfahrensschritte zur Missionsvorbereitung des Verfahrens des Ausführungsbeispiels gemäß Figur 8;
- Fig. 10: Verfahrensschritte zur Missionsdurchführung des Verfahrens des Ausführungsbeispiels gemäß Figur 8;
- Fig. 11: Verfahrensschritte zur Missionsnachbereitung des Verfahrens des Ausführungsbeispiels gemäß Figur 8;
- Fig. 12: Verfahrensschritte zum Abtauchen während der Missionsdurchführung gemäß Figur 10 und
- Fig. 13: Verfahrensschritte zum Lokalisieren und Untersuchen des Objekts während der Missionsdurchführung gemäß Figur 10.

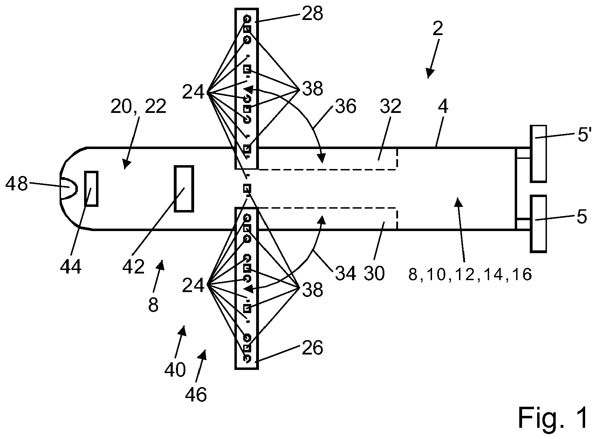

Fig. 1 zeigt ein unbemanntes Unterwasserfahrzeug 2 gemäß einem Ausführungsbeispiel zum Lokalisieren und Untersuchen eines am Gewässergrund eines Gewässers angeordneten Objekts. Das Objekt ist bspw. eine Pipeline oder ein Seekabel, das am Gewässergrund verlegt ist. Der Gewässergrund und somit das Objekt können in einer Tiefe von bis 1500 oder gar bis zu 2000 Meter unter der Oberfläche des Gewässers bzw. unter dem Meeresspiegel angeordnet sein. Das autonome Unterwasserfahrzeug 2 ist entsprechend druckfest ausgebildet, dass es in dieser Tiefe operieren kann.

Das unbemannte Unterwasserfahrzeug ist als autonomes Unterwasserfahrzeug (AUV = Autonomous Underwater Vehicle), als kabelgebunden operierendes Unterwasserfahrzeug (ROV = Remotely Operated Vehicle) oder derart ausgebildet, dass es wahlweise als AUV oder ROV eingesetzt werden kann.

Das Unterwasserfahrzeug 2 weist wenigstens eine Druckhülle 4 auf, innerhalb derer verschiedene Einrichtungen geschützt vom Wasser und geschützt vom Druck des Wassers untergebracht sind. Zur Fortbewegung weist das Unterwasserfahrzeug 2 Antriebe 5 und 5' auf, die, wie andere elektrische Einrichtungen des Unterwasserfahrzeugs 2 auch, von einem in der Druckhülle 4 untergebrachten Akkumulator mit elektrischer Energie versorgt werden. Bevorzugt sind weitere, hier nicht dargestellte Antriebe, wie bspw. ein horizontaler und/oder ein vertikaler Thruster zum Unterstützen einer Höhenänderung bzw. einer Seitwärtsbewegung oder einem Gegensteuern gegen eine Seitwärtsströmung am Unterwasserfahrzeug 2 vorgesehen.

Zum selbstständigen Navigieren weist das Unterwasserfahrzeug 2 Navigationsmittel 6 mit mehreren Navigationseinrichtungen bzw. Sensoren sowie eine Recheneinrichtung bzw. Algorithmen auf, welche die Navigation unterstützen. Derartige Algorithmen sind Bildverarbeitungsalgorithmen, eine künstliche Intelligenz bereitstellende Algorithmen sowie Algorithmen zur statistischen Signalverarbeitung. Die Navigationsmittel 6 sind insbesondere zum Bestimmen der absoluten Position des Unterwasserfahrzeugs 2 und zum gezielten Ansteuern von Zielkoordinaten geeignet und vorgesehen. Insbesondere ist mittels der Navigationsmittel 6 ein zielgerichtetes Abtauchen zu einer Abtauchposition möglich, die in großer Tiefe, von bspw. 1500 Meter, liegen kann.

Weiter weist das Unterwasserfahrzeug 2 ein Multisensorsystem 8 mit mehreren Sensoren zum Sammeln von Messdaten auf. Das Unterwasserfahrzeug 2 weist Objektlokalisierungsmittel 10 zum Lokalisieren des Objekts, Objektuntersuchungsmittel 12 zum Untersuchen des Objekts und Objektverlauferkennungsmittel 14 zum Erkennen des lokalen Objektverlaufs auf, die jeweils einzelne, mehrere oder alle dieser Messdaten verwenden. Der lokale Objektverlauf ist die Richtung, in welche sich das Objekt lokal erstreckt. Objektverlaufverfolgungsmittel 16 sind vorgesehen, um mittels des erkannten Objektverlaufs diesem Objektverlauf direkt über dem Objekt zu folgen bzw. um diesen Objektverlauf zu verfolgen. Das Multisensorsystem 8 ermöglicht dabei, dass zugleich Messdaten zum Lokalisieren des Objekts und Messdaten zum Untersuchen des Objekts gesammelt werden können. Einzelne, mehrere oder alle Messdaten können dabei auch zugleich zum Lokalisieren und zum Untersuchen des Objekts herangezogen werden. Mittels der Objektlokalisierungsmittel 10 wird aus den Messdaten, insbesondere unter zusätzlicher Nutzung der Navigationsmittel 6, das Objekt vermessen. Insbesondere werden Abschnitte des Objekts erkannt und diesen erkannten Abschnitten georeferenzierte Positionsdaten zugewiesen.

Das Multisensorsystem 8 umfasst dabei zumindest eine Sonareinrichtung 20 mit einem 3D-Untergrundsonar 22. Dadurch ist es den Objektverlauferkennungsmitteln 14 möglich, Abschnitte des Objekts bzw. das Objekt zu erkennen und zu vermessen, während sich das Unterwasserfahrzeug 2 auf einer Trajektorie bewegt, die im Wesentlichen ohne Querversatz oberhalb des Objektverlaufs liegt.

Demgegenüber würde ein Vermessen unter alleiniger Nutzung eines Seitensichtsonars einen seitlichen Querversatz selbst dann erfordern, wenn das Objekt über der Gewässergrundoberfläche angeordnet wäre. Unter oberhalb der Gewässergrundoberfläche angeordneten Abschnitten sind dabei sowohl mit dem Gewässergrund in Kontakt stehende bzw. aufliegende Abschnitte als auch freiliegende bzw. unterspülte Abschnitte des Objekts zu verstehen. Unterhalb der Gewässergrundoberfläche angeordnete Abschnitte bzw. verschüttete, eingegrabene, mit Sedimenten bedeckte oder überspülte Abschnitte des Objekts werden hingegen auch vom Seitensichtsonar nicht erfasst. Ein Unterwasserfahrzeug, das das Objekt allein mittels seines Seitensichtsonars vermisst, würde daher unterhalb der Gewässergrundoberfläche angeordnete Abschnitte des Objekts nicht oder unzureichend erfassen. Wenn jedoch einzelne Abschnitte des Objekts nicht erfasst werden, müssen folgende Abschnitte aufwändig wieder neu aufgefunden werden, was Suchmanöver und ein Manövrieren des Unterwasserfahrzeugs erforderlich macht, so dass das Objekt nicht zugleich lokalisiert und untersucht werden kann.

Das 3D-Untergrundsonar 22 am erfindungsgemäßen Unterwasserfahrzeug 2 ermöglicht es hingegen, dem Objektverlauf auf einer darüber befindlichen Trajektorie zu folgen und das Objekt dreidimensional zu vermessen, auch wenn Bereiche des Objekts verschüttet sind. Dies ermöglicht wiederum ein zeitgleiches Untersuchen bzw. Inspizieren des Objekts. Dadurch, dass ein einmaliges Abfahren über dem Objektverlauf zum Lokalisieren und Untersuchen ausreicht, können während einer Mission bzw. während einer durch die Kapazität des Akkumulators gegebenen Einsatzzeit des Unterwasserfahrzeugs 2 größere Bereiche des Objekts lokalisiert bzw. vermessen und untersucht werden.

Das 3D-Untergrundsonar kann dabei sowohl derart betrieben werden, dass es unter der Gewässergrundoberfläche angeordnete Abschnitte des Objekts bzw. vergrabene Abschnitte des Objekts erkennt, als auch derart, dass es freiliegende oder aufliegende Abschnitte des Objekts erkennt. Ferner vermisst das Multisensorsystem, insbesondere mittels der Sonareinrichtung 20, zugleich die Gewässergrundoberfläche bzw. den Meeresgrund in der Umgebung des Objekts.

Die Objektverlauferkennungsmittel erkennen bspw. ein etwaiges Abknicken des Objektsverlaufs, auch wenn das Objekt in einem Bereich abknickt, der unterhalb der Gewässergrundoberfläche angeordnet ist.

Das 3D-Untergrundsonar umfasst eine physikalische und eine synthetische Apertur. Die physikalische Apertur ist durch eine Reihung von Wasserschallwandlern 24 in seitlicher Querabrichtung zum autonomen Unterwasserfahrzeug 2 bzw. in seitlicher Querabrichtung zum Objektverlauf gegeben. Die synthetische Apertur erstreckt sich senkrecht zur physikalischen Apertur bzw. in Richtung des Objektverlaufs bzw. in Richtung der Trajektorie des Unterwasserfahrzeugs 2. Nacheinander ermittelte Messwerte der Wasserschallwandler 24 werden dabei derart rechnerisch miteinander verknüpft, als würden sie nicht von den selben Wasserschallwandlern zu unterschiedlichen Zeiten, sondern zugleich von diesen und weiteren Wasserschallwandlern an unterschiedlichen Orten bereitgestellt werden.

Die Wasserschallwandler 24 sind an Sensorträgern 26 und 28 sowie an der Druckhülle 4 des autonomen Unterwasserfahrzeugs 2 angeordnet. Diese Sensorträger 26 und 28 sind senkrecht zur Längsachse des Unterwasserfahrzeugs 2 horizontal geschwenkt, so dass sie wie Flügel seitlich vom Unterwasserfahrzeug 2 abstehen. Wenn das Unterwasserfahrzeug 2 nicht zum Lokalisieren bzw. zum Untersuchen des Objekts eingesetzt wird, bspw. beim Abtauchen oder Auftauchen, können diese Sensorträger 26 und 28 eingeklappt werden bzw. sein. Dabei kommen sie an gestrichelt angedeuteten Positionen 30 und 32 zum Liegen. Die Möglichkeit des Verschwenkens zwischen den dargestellten Positionen und diesen Positionen 30 und 32 der Sensorträger 26 und 28 sind mittels zwei Doppelpfeilen 34 und 36 angedeutet.

An den Sensorträgern 26 und 28 sowie an der Druckhülle 4 des Unterwasserfahrzeugs 2 sind ferner mehrere Magnetsensoren 38 als Teil einer dem Multisensorsystem 8 zugehörigen Magnetfelddetektionseinrichtung 40 angeordnet. Die Magnetfelddetektionseinrichtung ist als aktives Magnetometer ausgebildet, das aktiv ein Magnetfeld erzeugt, dessen Beeinflussung durch metallische Objekte mittels der Magnetsensoren ermittelt werden kann. Alternativ ist jedoch eine Ausbildung als passives Magnetometer, das eine Beeinflussung des Erdmagnetfelds durch metallische Objekte in der Umgebung misst, möglich. Die Magnetfelddetektionseinrichtung stellt Messdaten bereit, die zum Auffinden, Vermessen und Verfolgen des Objekts bzw. des Objektsverlaufs geeignet sind und alternativ oder zusätzlich zu Messdaten vom 3D-Untergrundsonar 22 verwendet werden.

Die Sonareinrichtung 20 weist neben dem 3D-Untergrundsonar 22 zusätzlich ein Mehrstrahlsonar 42, insbesondere zum Vermessen der Gewässergrundoberfläche in der Umgebung des Objekts, und ein Frontsichtsonar 44, insbesondere zum Erkennen von Hindernissen bzw. Anhebungen des Gewässeruntergrunds vor dem Unterwasserfahrzeug 2, auf. Auch der Objektverlauf vor dem Unterwasserfahrzeug 2 wird vorzugsweise zumindest unterstützend mittels des Frontsichtsonars 44 geschätzt. Weitere Messdaten werden von einem Seitensichtsonar 46 bereitgestellt. Das Seitensichtsonar 46 verwendet dabei in diesem Ausführungsbeispiel ebenfalls die Wasserschallwandler 24. Das Seitensichtsonar 46 dient in erster Linie zum Auffinden des Objekts seitlich neben dem autonomen Unterwasserfahrzeug 2. Wenn jedoch der mittels des Seitensichtsonars 46 abgetastete Bereich querab zur Längsachse des Unterwasserfahrzeugs 2 verschoben ist, weil bspw. die Quelle der Wasserschallsignale dieser Längsachse verschoben und bspw. an einem der Sensorträger 26 oder 28 angeordnet ist, kann das Unterwasserfahrzeug auch mittels des Seitensichtsonars Messdaten erzeugen, die von den Objektlokalisierungsmitteln und/oder den Objektuntersuchungsmitteln zum Lokalisieren bzw. Untersuchen des Objekts verwendet werden können.

Schließlich ist am Bug des autonomen Unterwasserfahrzeugs 2 eine Kamera 48 des Multisensorsystems 8 angeordnet, die eine visuelle Inspektion des Objekts ermöglicht. Auch das Navigieren bzw. das Erkennen und Folgen des Objektsverlaufs erfolgt in diesem Ausführungsbeispiel zumindest unterstützend mittels Messdaten von der Kamera 48, die in einer Bildverarbeitung derart ausgewertet werden, dass der Objektverlauf erkannt wird.

Alternativ oder zusätzlich können weitere Sensoren zum Navigieren, zum Folgen des Objektverlaufs sowie zum Bereitstellen von Messdaten für die Objektlokalisierungsmittel 10 und/oder für die Objektuntersuchungsmittel 12 vorgesehen sein. An den Enden der Sensorträger 26 und 28 sind verstellbare oder starre zur Stabilisierung des Unterwasserfahrzeugs 2 vorgesehene Ruder 50 und 52 angeordnet.

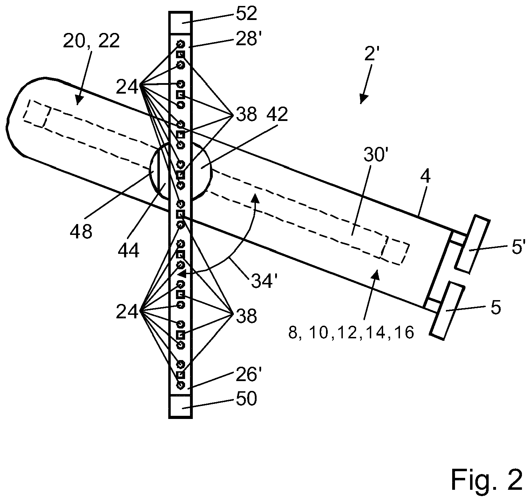

Fig. 2 zeigt ein unbemanntes Unterwasserfahrzeug 2' gemäß einem zweiten Ausführungsbeispiel der Erfindung in einer Sicht von unten. Das Unterwasserfahrzeug 2' unterscheidet sich vom Unterwasserfahrzeug 2 des ersten Ausführungsbeispiels gemäß Fig. 1 durch einen anstelle der Sensorträger 26 und 28 durchgehenden Sensorträger 26', der alle Wasserschallwandler 24 und alle Magnetsensoren 38 aufweist. Ferner sind das Mehrstrahlsonar 42, das Frontsichtsonar 44 und die Kamera 48 zusammen mit dem Sensorträger 26' schwenkbar im Bereich der Schwenkachse dieses Sensorträgers 26' angeordnet. Alternativ sind anders ausgebildete Sensorträger in vielfältiger Form denkbar. Der Sensorträger 26' kann, mittels eines Doppelpfeils 34' angedeutet, in eine Position 30' verschwenkt werden. Im Übrigen gleicht das Unterwasserfahrzeug 2' dem Unterwasserfahrzeug 2 des ersten Ausführungsbeispiels gemäß Fig. 1. Insbesondere bezeichnen gleiche Bezugsziffern hier, wie auch in allen anderen Figuren, gleiche oder gleichartige Teile.

Der Sensorträger 26' ist querab zum Objektverlauf eines nicht dargestellten Objekts, nicht jedoch querab zur Längsachse des Unterwasserfahrzeugs 2' angeordnet. Das Unterwasserfahrzeug 2' ist nämlich einer Strömung ausgesetzt, die zum Abtreiben des Unterwasserfahrzeugs 2' von einer vorgesehenen Trajektorie führen würde, wenn sich das Unterwasserfahrzeug 2' nicht schräg in Richtung der Strömung ausrichten würde. Das Unterwasserfahrzeug 2' ist somit schräg zu seiner Trajektorie ausgerichtet, wobei das Frontsichtsonar 44 und die Kamera 48 in die tatsächliche absolute Bewegungsrichtung des Unterwasserfahrzeugs 2' weisen und somit einige oder alle Sensoren optimal zur Bewegungsrichtung ausgerichtet sind.

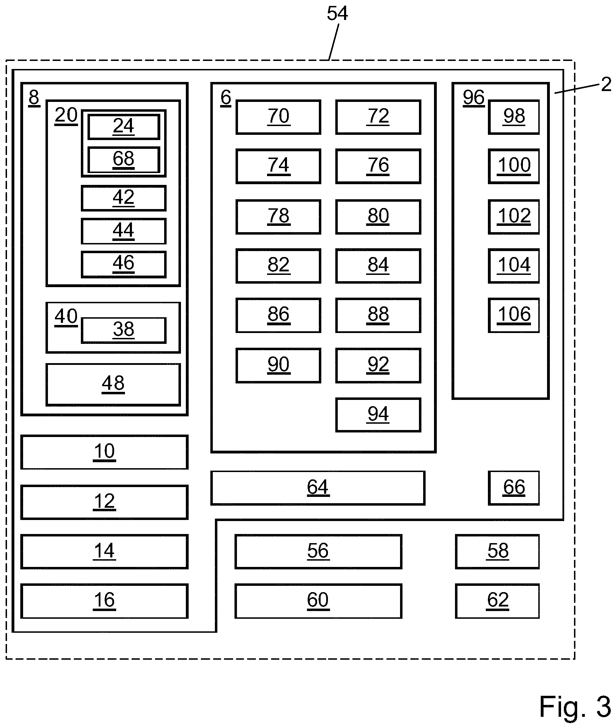

Fig. 3 zeigt ein System 54 mit einem unbemannten Unterwasserfahrzeug 2" gemäß einem dritten Ausführungsbeispiel der Erfindung in schematischer Darstellung.

Als außerhalb des Unterwasserfahrzeugs 2' angeordnete Einrichtung weist das System 54 eine Missionsplanungseinrichtung 56, wie bspw. eine Bedienkonsole mit Recheneinrichtung, auf, mittels der eine Mission geplant und Steuerdaten zur Steuerung der Mission erzeugt werden. Diese Steuerdaten werden mittels einer Steuerdatenübertragungseinrichtung 58 von der Missionsplanungseinrichtung 56 an das Unterwasserfahrzeug 2", bspw. mittels eines Kabels, über Funk oder mittels eines Speichermediums, übertragen.

Umgekehrt werden die während einer Mission gesammelten Messdaten mittels einer Messdatenausleseeinrichtung 60, ebenfalls bspw. mittels eines Kabels, über Funk oder mittels eines Speichermediums, an eine Messdatenauswerteeinrichtung 62 übertragen. Die Messdatenauswerteeinrichtung wertet die von den Objektlokalisierungsmitteln 10 und/oder den Objektuntersuchungsmitteln 12 bereitgestellten und ggf. vorverarbeiteten Messdaten aus und stellt diese Messdaten bzw. erkannte Verzweigungen, Ventile oder Beschädigungen bzw. Defekte am Objekt zugeordnet zu absoluten Positionen von Abschnitten des Objekts bereit.

Das Unterwasserfahrzeug 2" umfasst das Multisensorsystem 8, die Navigationsmittel 6, die Objektlokalisierungsmittel 10, die Objektuntersuchungsmittel 12, die Objektverlauferkennungsmittel 14, die Objektverlaufverfolgungsmittel 16, eine Steuereinrichtung 64 und eine einheitliche ausgebildete Datenschnittstelle 66 für die verschiedenen Sensoren. Die Steuereinrichtung 64 steuert das Unterwasserfahrzeug 2 selbsttätig in Abhängigkeit von Navigationsdaten, in Abhängigkeit der Steuerdaten für die Mission, in Abhängigkeit von mit den Steuerdaten an das Unterwasserfahrzeug 2" übertragenen oder in den Steuerdaten enthaltenen Vorwissen über die Lage des Objekts, in Abhängigkeit von der aktuellen Position des autonomen Unterwasserfahrzeugs 2" bzw. in Abhängigkeit von einer gewünschten Trajektorie sowie einer ggf. geringfügig hiervon abweichenden tatsächlichen Trajektorie. Die Steuereinrichtung steuert das Unterwasserfahrzeug dabei so präzise, dass während des Folgens des Objektverlaufs die Abweichung der tatsächlichen von einer gewünschten Trajektorie maximal einen halben Meter beträgt. Ferner ist es der Steuereinrichtung 64 in Verbindung mit den Navigationsmitteln 6 möglich, das Unterwasserfahrzeug beim Abtauchen derart präzise zu Steuern, dass die Abweichung von einer bspw. auf 1500 Meter Tiefe liegenden anzusteuernden Abtauchposition nach dem Abtauchen maximal 10 Meter beträgt.

Die einheitliche Datenschnittstelle 66 ermöglicht den flexiblen Einsatz verschiedener Sensoren am Unterwasserfahrzeug 2". Damit kann das Unterwasserfahrzeug 2" sowohl flexibel mit unterschiedlichen Sensoren ausgerüstet werden als auch flexibel unterschiedliche Sensoren während einer Mission einsetzen. Insbesondere dann, wenn aufgrund von Umwelteinflüssen oder Defekten einzelne Sensoren nicht einsatzbereit sind oder falsche Messergebnisse liefern, kann somit auf Messergebnisse anderer redundant zu verwendender Sensoren zurückgegriffen werden. Vorzugsweise findet somit eine Aufbereitung der Messdaten derart statt, dass unterschiedliche Sensoren, bspw. die Magnetsensoren 38 und das 3D-Untergrundsonar 22, aufbereitete Messdaten liefern, die direkt miteinander verglichen werden können. Ein Vergleich der Messdaten kann bereits im autonomen Unterwasserfahrzeug 2", bspw. mittels der Objektverlauferkennungsmittel 14, an einer Stelle, die im Falle einer Ausbildung des unbemannten Unterwasserfahrzeugs 2 als ROV über ein Kabel, bspw. einen Lichtwellenleiter, mit dem Unterwasserfahrzeug verbunden ist, oder aber in der Messdatenauswerteeinrichtung 62 und somit nach Missionsende erfolgen.

Das Multisensorsystem 8 umfasst die Sonareinrichtung 20 mit dem 3D-Untergrundsonar 22, ihrerseits aufweisend die Wasserschallwandler 24 sowie Mittel zum Bereitstellen der bereits genannten synthetischen Apertur bzw. eine synthetische Apertur 68, mit dem Mehrstrahlsonar 42, mit dem Frontsichtsonar 44 und mit dem Seitensichtsonar 46. Weiter weist das Multisensorsystem 8 die Magnetfelddetektionseinrichtung 40 mit den Magnetsensoren 38 sowie die Kamera 48 auf.

Die Navigationsmittel 6 umfassen einen Stampfsensor 70 und einer Rollsensor 72 jeweils zum Ermitteln von Kippbewegungen des Unterwasserfahrzeugs. Weiter weisen die Navigationsmittel 6 einen Magnetkompass 74, ein Dosenbarometer bzw. eine Druckdose 76, ein Echolot 78, eine Einrichtung 80 eines sog. "Ultra-Short-Baseline"-Unterwassernavigationssystems, einen Transponder 82, einen Responder 84, einen Ultraschall-Doppler-Profil-Strömungsmesser 86, einen Beschleunigungssensor 88, eine Messsonde 90 zum Messen des Salzgehalts, der Wassertemperatur sowie der Tiefe im Wasser, eine Empfangseinrichtung 92 für Satellitensignale eines satellitengestützten Navigationssystems und einen Trübungssensor 94 auf.

Das Unterwasserfahrzeug 2" weist ferner Kommunikationsmittel 96 zur Kommunikation mit anderen Einrichtungen vor, während oder nach einer Mission auf. Insbesondere umfassen die Kommunikationsmittel 96 eine akustische Unterwasserschallkommunikationseinrichtung 98 zur Kommunikation durch das Wasser mittels Wasserschallsignalen auf. Bspw. ermittelt während des Abtauchens ein Mutterschiff, vorzugsweise unter Nutzung des Transponders 82 und/oder des Responders 84 die Position des Unterwasserfahrzeugs 2" im Wasser, relativ zum Mutterschiff und absolut in Verbindung mit einer bspw. satellitengestützen Positionsbestimmung des Mutterschiffs und übermittelt die festgestellte Position des Unterwasserfahrzeugs 2" mittels Wasserschallsignalen, die von der akustischen Unterwasserkommunikationseinrichtung 98 empfangbar sind, an dieses Unterwasserfahrzeug 2".

Weiter umfassen die Kommunikationsmittel 96 eine Satellitenkommunikationseinrichtung 100 zur Kommunikation über einen Satelliten, wenn das Unterwasserfahrzeug 2" aufgetaucht ist bzw. an der Oberfläche des Gewässers schwimmt.

Schließlich umfassen die Kommunikationsmittel 96 eine WLAN-Kommunikationseinrichtung 102 zur drahtlosen Kommunikation, insbesondere Übertragung von Steuerdaten oder Messdaten, eine Netzwerkeinrichtung 104 zum kabelgebundenen Übertragen dieser Daten und eine Funkverbindungseinrichtung 106 zur Kommunikation über Funk mittels des sog. "Radio Link Protocols (RLP)" bzw. mittels eines Verfahrens, das zur Minimierung von Übertragungsverlusten Informationen ggf. auch mehrfach sendet.

Das System 54 kann abweichend von der Darstellung gemäß Fig. 3 eine reduzierte Anzahl von Komponenten, insbesondere Sensoren, aufweisen. Umgekehrt können die Unterwasserfahrzeuge 2 und 2' gemäß den ersten beiden Ausführungsbeispielen der Figuren 1 und 2 dort nicht dargestellte Komponenten bzw. Sensoren des Unterwasserfahrzeugs 2" aufweisen.

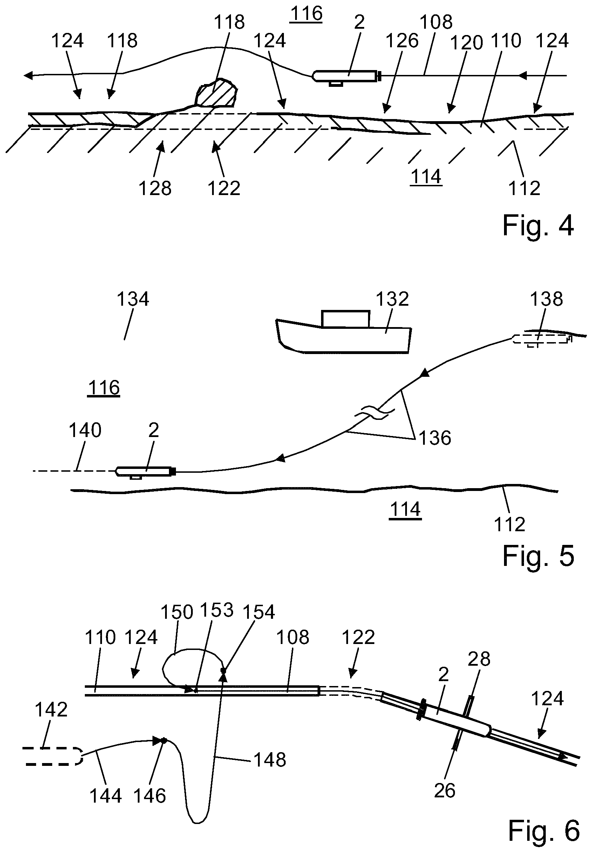

Fig. 4 zeigt das unbemannte Unterwasserfahrzeug 2 des ersten Ausführungsbeispiels gemäß Fig. 1, das sich auf seiner Trajektorie 108, von der zurückgelegte und noch zurückzulegende Teile durch eine Linie angedeutet sind, über einer Pipeline 110 als zu lokalisierendes und untersuchendes Objekt, dem Verlauf der Pipeline folgend, hinwegbewegt. Die Navigationsmittel 6 bestimmen dabei jeweils die aktuelle absolute Position des Unterwasserfahrzeugs 2. Die zu einer jeweiligen Zeit ermittelten Messdaten werden der zur dieser Zeit jeweils eingenommenen Position zugeordnet und entsprechend zugeordnet gespeichert. Zur Position des Unterwasserfahrzeugs 2 gehört dabei vorzugsweise eine Orientierung des Unterwasserfahrzeugs 2 bzw. der jeweiligen Sensoren, falls die Orientierung der Sensoren relativ zur Orientierung des Unterwasserfahrzeugs 2' verändert werden kann, wie dies bspw. beim Unterwasserfahrzeug 2' des zweiten Ausführungsbeispiels gemäß Fig. 2 der Fall ist.

Die Pipeline 110 ist an der Gewässergrundoberfläche 112 des Gewässergrunds 114 eines Gewässers 116 verlegt. Die Pipeline 110 weist über der Gewässergrundoberfläche 112 angeordnete Bereiche 118 und 120 sowie einen unterhalb der Gewässergrundoberfläche 112 angeordneten Bereich 122 auf. Der Bereich 118 weist einen oder mehrere auf dem Gewässergrund 114 aufliegende Abschnitte 124 auf, die direkt mit dem Gewässergrund 114 in Kontakt stehen, jedoch nicht bedeckt bzw. in den Gewässergrund 114 eingegraben sind. Auch der Bereich 120 weist mehrere aufliegende Abschnitte 124 auf. Darüber hinaus weist der Bereich 120 einen oder mehrere freiliegende bzw. unterspülte Abschnitte 126 auf, die nicht direkt mit dem Gewässergrund 114 in Kontakt stehen, so dass die Pipeline 110 im Bereich dieser unterspülten Abschnitte 126 durchhängt. Der unter der Gewässergrundoberfläche 112 angeordnete Bereich 122 weist einen oder mehrere eingegrabene Abschnitte auf, die vollständig bedeckt und daher visuell vom Unterwasserfahrzeug 2 ausgehend nicht sichtbar sind. Auch mittels des Seitensichtsonars 46 können die eingegrabenen Abschnitte 128 der Pipeline 110 nicht lokalisiert bzw. vermessen und nicht untersucht werden.

Dennoch lokalisiert das autonome Unterwasserfahrzeug 2 alle Abschnitte der Pipeline 110, unabhängig davon, ob es sich dabei um aufliegende Abschnitte 124, freiliegende Abschnitte 126 oder eingegrabene Abschnitte 128 handelt, bzw. unabhängig davon, ob die jeweiligen Abschnitte bzw. die lokalen Abschnitte 124, 126, 128 der Pipeline 110 über oder unter der Gewässergrundoberfläche 112 angeordnet sind.

Die Objektverlauferkennungsmittel 14 erkennen den lokalen Objektverlauf der Pipeline 110 bzw. die Richtung, in der sich die Pipeline weiter erstreckt. Insbesondere bedienen sich die Objektverlauferkennungsmittel 14 dabei Messdaten des 3D-Untergrundsonars 22 und/oder der Magnetfelddetektionseinrichtung 40, um den Objektverlauf im unter der Gewässergrundoberfläche 112 angeordneten Bereich 122 der Pipeline 110 zu schätzen.

Auf dem Gewässergrund 114 ist eine Erhebung bzw. ein Hindernis 130 angeordnet, um zu veranschaulichen, dass das Unterwasserfahrzeug 2 dieses Hindernis 130 nicht etwa auf traditionelle Weise seitlich umfährt, sondern unter Einhaltung eines definierten Mindestabstands das Hindernis 130 im Wesentlichen ohne Querversatz zur Pipeline 110 überfährt. Auch dies trägt wesentlich dazu bei, dass das Unterwasserfahrzeug 2 die Pipeline 110 zugleich lokalisieren bzw. vermessen und untersuchen kann. Insbesondere passen die Objektverlaufverfolgungsmittel 16 die Trajektorie 108 des Unterwasserfahrzeugs 2 immer derart an, dass ein Querversatz der Trajektorie relativ zum erkannten Objektverlauf unter einem definierten Grenzwert gehalten wird, der bspw. eine visuelle Inspektion der Pipeline 110 in den Bereichen 118 und 120 bzw. eine Inspektion mittels Sensoren von oben zulässt.

Fig. 5 zeigt eine als Versorgungsschiff bzw. Trägerschiff ausgebildete Trägerplattform 132, die im Bereich der Gewässeroberfläche 134 des Gewässers 116 schwimmt. Ferner ist das abgetauchte Unterwasserfahrzeug 2 des ersten Ausführungsbeispiels gemäß Fig. 1 mit seiner Abtauchtrajektorie 136, ausgehend von einer gestrichelt angedeutete vorherigen Position 138 des Unterwasserfahrzeugs 2 im Bereich der Gewässeroberfläche 134, dargestellt.

Beim Abtauchen bzw. beim Abfahren der Abtauchtrajektorie 136 navigiert das Unterwasserfahrzeug 2 mittels seiner Navigationsmittel 6. Insbesondere sendet das Unterwasserfahrzeug 2 vorzugsweise in Erwiderung auf das Empfangen von Wasserschallsignalen vom Trägerschiff 132 seinerseits Wasserschallsignale aus, die vom Trägerschiff 132 empfangen werden, welches anhand dieser empfangenen Wasserschallsignale mittels Laufzeitmessungen die aktuelle Position des Unterwasserfahrzeugs 2, insbesondere unter Heranziehung seiner bspw. mittels Satellitensignalen ermittelten Eigenposition, bestimmt. Diese bestimmte Position des Unterwasserfahrzeugs 2 übermittelt das Trägerschiff 132 mittels weiterer Wasserschallsignale an das Unterwasserfahrzeug 2. Das Unterwasserfahrzeug 2 kann daher ggf. vorhandene Abweichungen seiner Position von der vorgesehenen Abtauchtrajektorie erkennen und diese Abweichungen durch entsprechendes Gegensteuern kompensieren, so dass die Abtauchtrajektorie 136 im Wesentlichen der vorgesehenen Abtauchtrajektorie gleicht. Das Unterwasserfahrzeug 2 befindet sich nach dem Abtauchen in der dargestellten Position in der vorgesehenen Operationstiefe 140. Diese Operationstiefe 140 ist entweder relativ zur Gewässeroberfläche 134 oder zur Gewässergrundoberfläche 112 festgelegt. In jedem Fall ist die Steuereinrichtung 64 dabei derart ausgebildet, dass ein definierter Mindestabstand und vorzugsweise auch ein definierter Höchstabstand des Unterwasserfahrzeugs 2 zur Gewässergrundoberfläche 112 eingehalten wird.

Fig. 6 zeigt das Unterwasserfahrzeug 2 beim Lokalisieren und Untersuchen der Pipeline 110 über dieser Pipeline 110 in einer Draufsicht. Gestrichelt ist eine Position 142 des Unterwasserfahrzeugs 2 angedeutet, die der Position des Unterwasserfahrzeugs 2 gemäß der Darstellung in Fig. 5 nach dem Abtauchen bzw. nach dem Abfahren der Abtauchtrajektorie 136 entspricht. Das Unterwasserfahrzeug 2 hat in der Position 142 somit seine Abtauchtiefe erreicht und steuert auf einer Trajektorie 144 eine zuvor im Unterwasserfahrzeug 2 gespeicherte oder eine mittels Wasserschallsignalen oder über ein Kabel empfangene Abtauchposition 146 an. Hiernach führt das Unterwasserfahrzeug 2 ein Suchmanöver durch, bei welchem es aktiv unter Nutzung des Multisensorsystems 8, insbesondere unter Nutzung der Sonareinrichtung 20, versucht, die Pipeline 110 aufzuspüren. Beim Abfahren einer Trajektorie 148 lokalisiert das Unterwasserfahrzeug 2 die Pipeline 110 und erkennt einen lokalen Verlauf dieser Pipeline. Das Unterwasserfahrzeug 2 berechnet daher eine Anfahrtrajektorie 150 zu einer Startposition 152, die es ab einer Position 154 abfährt. Nachfolgend wird die Trajektorie 108 direkt über der Pipeline 110 gemäß der Darstellung in Fig. 4 abgefahren.

Die beim Abtauchen bzw. beim Abfahren der Abtauchtrajektorie 136 eingeklappten Sensorträger 26 und 28 werden nach Erreichen der Operationstiefe 140 bzw. während des Abfahrens der Trajektorie 144 zur Abtauchposition 146 oder an der Abtauchposition 146 ausgeklappt bzw. in eine Position gebracht, in der die Wasserschallwandler 24 bzw. die Magnetsensoren 38 eine geeignete Position relativ zum Unterwasserfahrzeug 2 aufweisen, um die Pipeline 110 aufzufinden bzw. zu untersuchen.

Im Bereich der unter der Gewässergrundoberfläche 122 angeordneten Abschnitte der Pipeline 110 weist die Pipeline 110 eine Krümmung auf, die jedoch vom Unerwasserfahrzeug 2 durch die Sedimente hindurch, welche die Pipeline 110 bedecken, erkannt wird, so dass das Unterwasserfahrzeug 2 dem Verlauf der Pipeline 110 folgt, unabhängig davon, ob die jeweiligen Abschnitte der Pipeline 110 über oder unter der Gewässergrundoberfläche 112 angeordnet sind. Die Trajektorie 124 des Unterwasserfahrzeugs 2 liegt in jedem Fall im Wesentlichen senkrecht über der Pipeline 110. Insbesondere wird ein Querversatz des Unterwasserfahrzeugs 2 relativ zur Pipeline 110 erkannt, wobei das Unterwasserfahrzeug 2 derart gesteuert wird, dass versucht wird, einen erkannten Querversatz zu minimieren.

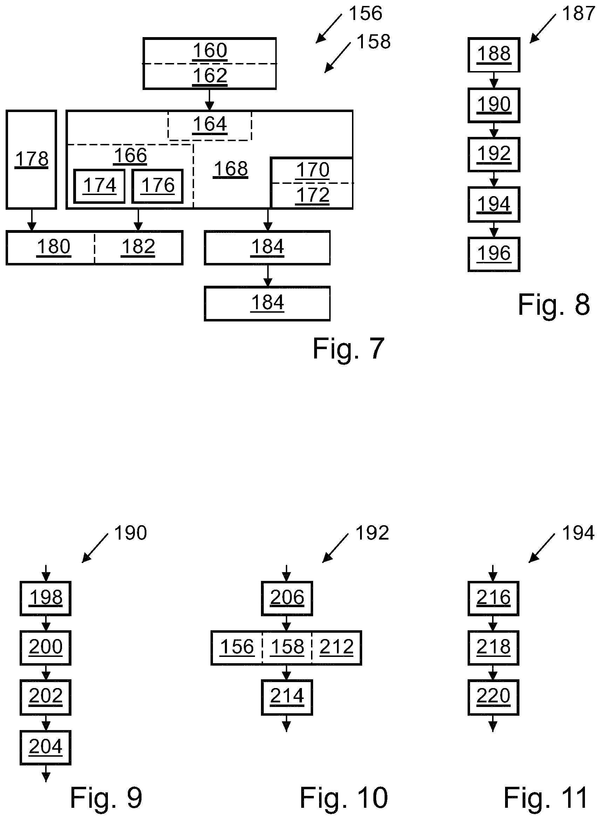

Fig. 7 zeigt Verfahrensschritte beim Lokalisieren 156 und beim Untersuchen 158 des Objekts 110 mittels der Erfindung. Mittels des Multisensorsystems 8 werden in einem Schritt 160 Messwerte erzeugt bzw. gesammelt und in einem Schritt 162 bereitgestellt. Einige oder alle der bereitgestellten Messwerte werden in einem Schritt 164 miteinander verknüpft bzw. fusioniert. Bspw. werden die Messwerte auf Konsistenz zueinander abgeglichen und/oder es werden gemittelte oder korrigierte Messwerte aus den im Schritt 162 bereitgestellten Messwerten erzeugt. Mittels der Messwerte werden in einem Schritt 166 lokale Abschnitte des Objekts lokalisiert, werden in einem Schritt 168 diese lokalen Abschnitte untersucht, wird in einem Schritt 170 der lokale Objektverlauf erkannt und wird in einem Schritt 172 dieser erkannte lokalen Objektverlauf verfolgt.

Im Schritt 166 ist enthalten, dass in einem Schritt 174 ein lokaler Abschnitt des Objekts 110 vermessen und in einem Schritt 176 ein Bereich der Gewässergrundoberfläche 112 in der Umgebung dieses Abschnitts des Objekts 110 ebenfalls vermessen wird. Das Verknüpfen der Messdaten im Schritt 164 kann alternativ oder zusätzlich auch in den Schritt 166, in den Schritt 168 und/oder in den Schritt 170 integriert sein.

Mittels der Navigationsmittel 6 wird in einem Schritt 178 die Position, die Richtung und die Geschwindigkeit des Unterwasserfahrzeugs 2 bestimmt. Mittels dieser bestimmten Position wird einem Schritt 180 die Position des lokalen Abschnitts des Objekts 110 ermittelt. Hierzu werden die bereitgestellten und ggf. miteinander verknüpften Messdaten bzw. wird die durch den Schritt 166 ermittelte Lage des Objekts herangezogen. In einem Schritt 182 werden die ggf. verknüpften und/oder weiter verarbeiteten Messdaten der Position des lokalen Abschnitts bzw. der Position des Unterwasserfahrzeugs 2 zugeordnet. Bspw. wird allen zu einer bestimmten Zeit ermittelten Messdaten bzw. allen aus diesen Messdaten gewonnenen Daten sowie den von den Navigationsmitteln 6 bereitgestellten Daten bzw. den Positionen des Unterwasserfahrzeugs und/oder der Position des lokalen Abschnitts das jeweils selbe Zeitsignal zugeordnet, so dass mittels dieses Zeitsignals eine Zuordnung der Daten zueinander bspw. bei einer späteren Auswertung möglich ist.

In einem Schritt 184 wird die relative Lage des lokalisierten Abschnitts relativ zur lokalen Gewässergrundoberfläche 112 ermittelt und anhand dieser ermittelten Lage in einem Schritt 186 festgestellt, ob der jeweilige Abschnitt des Objekts 110 auf dem Gewässergrund 114 aufliegt, in den Gewässergrund 114 eingegraben ist oder freiliegend ist.

Die Schritte 160 bis 182 finden wiederholt während einer Mission statt. Ggf. erfolgen auch die Schritte 184 und 186 schon während der Durchführung der Mission. Andernfalls können die Schritte 184 und 186 auch nach einer Mission im Zuge einer Auswertung bzw. Nachbereitung der Mission erfolgen.

Das Verfahren eignet sich nicht nur zum Detektieren von Seekabeln oder Pipelines. Bspw. können auch Minen mittels der Erfindung vorteilhaft aufgespürt werden. Insbesondere die Verknüpfung der Daten im Schritt 164 ermöglicht es nämlich, Minen sehr zuverlässig von anderen Objekten zu unterscheiden, da bspw. für ein Objekt, das zwar visuell wie eine Mine mit einer metallischen Hülle aussieht, jedoch mittels der Magnetsensoren 38 bzw. mittels des Magnetometers nicht als ein Metall aufweisendes Objekt erkannt wird, ausgeschlossen werden kann, dass es sich bei dem Objekt um eine derartige Mine handelt.

Fig. 8 zeigt den Verfahrensablauf eines Verfahrens 187 gemäß einem Ausführungsbeispiel der Erfindung. Das Verfahren 187 startet in einem Schritt 188. Nachfolgend wird in einem Schritt 190 eine Mission vorbereitet, in einem Schritt 192 die vorbereitete Mission durchgeführt und in einem Schritt 194 die durchgeführte Mission nachbereitet. Damit endet das Verfahren gemäß einem Schritt 196.

Fig. 9, Fig. 10 und Fig. 11 zeigen die Verfahrensschritte 190, 192 und 194 des Ausführungsbeispiels gemäß Fig. 8 in feinerer Untergliederung.

Fig. 9 zeigt das Vorbereiten der Mission gemäß Schritt 190. Zunächst wird die Mission in einem Schritt 198 geplant. Bspw. wird mit Vorwissen über die Lage des Objekts 110 am Gewässergrund 114 die Abtauchposition 146 festgelegt. In einem Schritt 200 werden nachfolgend gemäß der geplanten Mission Steuerdaten erzeugt, die geeignet sind, das Unterwasserfahrzeug 2 mittels der Navigationsmittel 6 zur Abtauchposition 136 und nach Durchführung seiner Aufgabe wieder zu einer Bergeposition zu navigieren, von der es geborgen und/oder bei der es versorgt werden kann.

Gemäß einem Schritt 202 werden die Steuerdaten an das Unterwasserfahrzeug 2, bspw. mittels eines portablen Massenspeichers, über Funk oder über einer Netzwerkverbindung, übermittelt. Schließlich wird das Unterwasserfahrzeug 2 in einem Schritt 204 zu Wasser gelassen. Von dort navigiert es bevorzugt selbstständig, alternativ jedoch auch gestützt durch Informationen, die es über ein Kabel empfängt, wenn das Unterwasserfahrzeug als ROV ausgebildet ist und entsprechend eingesetzt wird.

Fig. 10 zeigt Schritte beim Durchführen der Mission gemäß Schritt 192. Insbesondere taucht das Unterwasserfahrzeug 2 gemäß einem Schritt 206 auf seiner Abtauchtrajektorie 136 zur Abtauchposition 146 ab. Nachfolgend wird im Schritt 156 das Objekt lokalisiert, im Schritt 158 zugleich das Objekt untersucht und in einem Schritt 212 zugleich dem Objektverlauf gefolgt bzw. der Objektverlauf verfolgt. Schließlich steuert das Unterwasserfahrzeug 2 in einem Schritt 214 die Bergeposition an bzw. taucht auf.

Fig. 11 zeigt den Schritt 194 mit drei Unterschritten, nämlich mit einem Schritt 216, in welchem das Unterwasserfahrzeug 2, das die Bergeposition erreicht hat, geborgen wird, mit einem Schritt 218, in welchem die gesammelten Messdaten bzw. Daten ausgelesen werden, und mit einem Schritt 220, in welchem die ausgelesenen Messdaten ausgewertet werden. Die ausgelesenen auszuwertenden Messdaten können dabei die im Schritt 162 bereitgestellten Messdaten sein bzw. diese Messdaten enthalten und/oder vorverarbeitete bzw. korrigierte Messdaten oder aus Messdaten, insbesondere in Kombination mit weiteren Messdaten, erhaltene Daten sein. Auch die Ortsinformationen bzgl. des Unterwasserfahrzeugs 2 bzw. bzgl. der lokalisierten Abschnitte des Objekts 110 sind in diesen Daten enthalten.

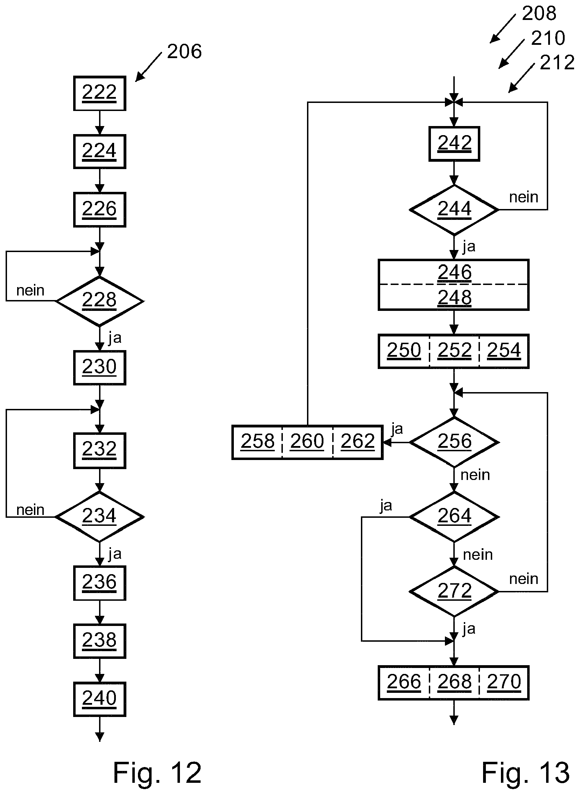

Fig. 12 zeigt den Schritt 206 gemäß Fig. 10 bzw. das Abtauchen zur Abtauchposition in einer besonderen Ausführungsform im Detail.

In einem Schritt 222 werden zunächst mittels des Global Positioning Systems (GPS) noch vor dem Abtauchen die aktuelle Position des Unterwasserfahrzeugs 2 aus empfangenen Satellitensignalen ermittelt. Auch eine Kommunikation über Funk zwischen dem Unterwasserfahrzeug 2 und dem Trägerschiff 132 ist an dieser Stelle noch möglich. Weiter kann das Unterwasserfahrzeug 2 mittels Satellitensignalen mit dem Trägerschiff 132 oder mit einer anderen mobilen oder festen Einrichtung, bspw. an Land, kommunizieren.

In einem Schritt 224 wird das Abtauchen des Unterwasserfahrzeugs 2 gestartet. Nachfolgend navigiert das Unterwasserfahrzeug 2 gemäß einem Schritt 226 über Laufzeitmessungen von Wasserschallsignalen zwischen dem Unterwasserfahrzeug 2 und dem Trägerschiff 132 sowie unterstützend mit den weiteren Navigationsmitteln, bspw. mit dem Magnetkompass 74, dem Dosenbarometer 76 oder dem Beschleunigungssensor 88. Alternativ startet im Schritt 226 das Navigieren mittels anderer Navigationsmittel, die zur Navigation im Wasser geeignet sind.

Das Unterwasserfahrzeug 2 versucht nun seine Operationstiefe 140 zu erreichen. Dies wird durch eine Abfrage 228 verdeutlicht, gemäß der abgefragt wird, ob die Operationstiefe 140 erreicht ist. Erst wenn die Operationstiefe 140 erreicht ist, wird in einem Schritt 230 das Abtauchen beendet. Es folgt ein Navigieren zur Abtauchposition 146, die in der Operationstiefe 140 liegt, gemäß einem Schritt 232.

Das Navigieren zur Abtauchposition 146 wird gemäß einer Abfrage 234, ob die Abtauchposition 146 erreicht ist, bis zum Erreichen dieser Abtauchposition 146 fortgesetzt. Danach wird das Navigieren mittels der Laufzeitmessungen zum Trägerschiff 132 in einem Schritt 236 gestoppt. Es kann jedoch weiterhin eine Positionsermittlung durch derartige Laufzeitmessungen zum Trägerschiff 132 stattfinden. Nachfolgend werden in einem Schritt 238 die Sensorträger 26, 28 abgeschwenkt und somit die daran befestigten Sensoren einsatzfähig gemacht. In Kombination mit der Bewegung des Unterwasserfahrzeugs 2 wird dadurch bei geeigneter Kombination von mittels dieser Sensoren am Sensorträger 26, 28 gewonnener Messdaten die Beobachtungsfläche gemäß einem Schritt 240 aufgespannt. Damit ist bspw. ein Auffinden des Objekts 110 mittels des Seitensichtsonars 46 bzw. eine dreidimensionale Untersuchung des Gewässergrunds 114 mittels des 3D-Untergrundsonars 220 möglich.

Fig. 13 zeigt die Schritte 208, 210 und 212 bzw. das Lokalisieren und Untersuchen des Objekts 110 sowie das Verfolgen des Objektverlaufs in einer besonderen Ausführungsform im Detail.

In einem Schritt 242 führt das Unterwasserfahrzeug 2 eine Suchroutine durch. Dabei wird nach einem bestimmten Muster die Umgebung nach dem Objekt 110 abgesucht. Dies erfolgt gemäß einer Abfrage 244, ob das Objekt 110 aufgefunden wurde, solange, bis ein Abschnitt des Objekts 110 aufgespürt und lokalisiert wurde. Dabei wird bereits der lokale Objektverlauf detektiert, so dass in dem Fall, dass die Abfrage 244 positiv ist, in einem Schritt 246 die Anfahrtrajektorie 150 zur Startposition 152 derart berechnet wird, dass die Startposition über dem Objekt 110 liegt und die Richtung der Anfahrtrajektorie 150 in dieser Startposition 152 mit der Richtung des lokalen Objektverlaufs unter der Startposition 152 übereinstimmt. In einem Schritt 248 wird diese Anfahrtrajektorie 150 schließlich vom Unterwasserfahrzeug 2 abgefahren.

Nachfolgend wird in einem Schritt 146 begonnen, lokale Abschnitte des Objekts 110 zu lokalisieren, in einem Schritt 252 begonnen, zugleich lokale Abschnitte des Objekts 110 zu untersuchen, und in einem Schritt 254 begonnen, den lokalen Objektverlauf zu verfolgen. Somit bewegt sich das Unterwasserfahrzeug 2 den Objektverlauf verfolgend über dem Objekt 110, vermisst dabei das Objekt 110 und untersucht das Objekt 110, bspw. visuell mittels der Kamera 48.

Dies wird unterbrochen, wenn gemäß einer Abfrage 256 festgestellt wird, dass der Kontakt zum Objekt 110 lokal verloren gegangen ist bzw. dass lokale Abschnitte des Objekts 110 nicht detektiert werden konnten. Entsprechend wird in diesem Fall in einem Schritt 258 das Lokalisieren der lokalen Abschnitte des Objekts 110 unterbrochen bzw., eingebunden in die darauf wieder folgende Suchroutine 242, fortgesetzt. Zugleich mit dem Schritt 258 wird in einem Schritt 260 das Untersuchen der lokalen Abschnitte des Objekts 110 und in einem Schritt 262 das Verfolgen des lokalen Objektverlaufs unterbrochen.

Während des Lokalisierens und Untersuchens der lokalen Abschnitte des Objekts 110 sowie während des Verfolgens des lokalen Objektverlaufs bzw. wenn die Abfrage 256 negativ ist, wird in einer Abfrage 264 ermittelt, ob die Zielposition erreicht ist. Wenn nämlich festgestellt wird, dass die Zielposition erreicht ist, wird ähnlich den Schritten 258, 260 und 262 in einem Schritt 266 das Lokalisieren der lokalen Abschnitte des Objekts 110 beendet, in einem Schritt 268 das Untersuchen der lokalen Abschnitte des Objekts 110 beendet und in einem Schritt 270 das Folgen des lokalen Objektverlaufs beendet. Danach wird mit Schritt 214 gemäß Fig. 10 fortgefahren.

Wenn jedoch gemäß Schritt 264 die Zielposition noch nicht erreicht ist, wird in einer Abfrage 272 ermittelt, ob der Ladezustand einer Energieversorgungsquelle bzw. eines Akkumulators des Unterwasserfahrzeugs 2 unter einem bestimmten Wert liegt. Dieser bestimmte Wert ist vorzugsweise derart bemessen, dass ein Manövrieren des Unterwasserfahrzeugs 2 aus eigenem Antrieb zur vorgesehenen Bergeposition bzw. zum Auftauchen des Unterwasserfahrzeugs 2 noch möglich ist, dass jedoch darüber hinaus lediglich eine definierte Sicherheitsreserve gespeicherter elektrischer Energie in der Energiespeichereinrichtung des Unterwasserfahrzeugs 2 vorhanden ist. Wenn der Ladezustand den definierten Wert unterschreitet, wird mit den Schritten 266, 268 und 270 fortgefahren, so dass das Unterwasserfahrzeug nachfolgend seine Bergeposition ansteuert bzw. auftaucht. Andernfalls werden wiederholt Abfragen 256, 264 und 272 durchlaufen, solange bis eine dieser Abfragen positiv beantwortet werden kann.

## Patentansprüche

1. Unbemanntes Unterwasserfahrzeug zum Lokalisieren (156) und Untersuchen (158) eines am Gewässergrund (114) eines Gewässers (116) angeordneten Objekts (110) mit Objektlokalisierungsmitteln (110) zum Lokalisieren (156) des Objekts (110) und mit Objektuntersuchungsmitteln (12) zum Untersuchen (158) des Objekts (110), wobei
das autonome Unterwasserfahrzeug eine Sonareinrichtung (20) aufweist zum Sammeln (160) von Messdaten und die Objektlokalisierungsmittel (10) ausgebildet sind zum räumlichen akustischen Lokalisieren (166) sowohl von über als auch von unter der Gewässergrundoberfläche (112) angeordneten lokalen Abschnitten (124, 126, 128) des Objekts (110) mittels dieser Messdaten, während das Unterwasserfahrzeug (110) sich zugleich über diese lokalen Abschnitte (124, 126, 128) hinwegbewegt zum Untersuchen (168) dieser oder benachbarter lokaler Abschnitte (124, 126, 128) des Objekts (110) mittels der Objektuntersuchungsmittel (12), und Objektverlauferkennungsmittel (14) zum Erkennen (170) des lokalen Objektverlaufs des Objekts (110) mittels der lokalisierten lokalen Abschnitte (124, 126, 128) unabhängig davon eingerichtet sind, ob diese lokalen Abschnitte (124, 126, 128) aufliegend, eingegraben oder freiliegend sind, **dadurch gekennzeichnet, dass** Objektverlaufverfolgungsmittel (16) zum Anpassen einer Trajektorie (108) des Unterwasserfahrzeugs (2) mittels des erkannten Objektverlaufs derart eingerichtet sind, dass ein Querversatz der Trajektorie (108) relativ zum erkannten Objektverlauf möglichst gering und/oder möglichst konstant gehalten wird, und dass die Sonareinrichtung (20) ein 3D-Untergrundsonar (22) aufweist.

2. Unbemanntes Unterwasserfahrzeug nach Anspruch 1,
**gekennzeichnet durch** ein Multisensorsystem (8) mit dem 30-Untergrundsonar (22) und mit einem, mehreren oder allen der folgenden Sensoren (38 - 48) zum Sammeln (160) von Messdaten sowie zum Lokalisieren (156) und/oder zum Untersuchen (158) des Objekts (110) mittels dieser Sensoren (38 - 48):
- wenigstens einer Kamera (48),
- einem Seitensichtsonar (46),
- einem Mehrstrahlsonar (42),
- einem Frontsichtsonar (44),
- wenigstens einem Magnetsensor (38) einer Magnetfelddetektionseinrichtung (40).

3. Unbemanntes Unterwasserfahrzeug nach Anspruch 2,
**gekennzeichnet durch**
eine Ausbildung des Multisensorsystems (8) zum Sammeln (160) von Messdaten, die geeignet sind zum Vermessen (176) der lokalen Gewässergrundoberfläche (112) unter dem Unterwasserfahrzeug (2), zum Erkennen (184) der Lage der detektierten lokalen Abschnitte (124, 126, 128) des Objekts (110) relativ zur lokalen Gewässergrundoberfläche (112) und zum Klassifizieren (186) mittels der erkannten Lage, ob es sich bei den lokalen Abschnitten (124, 126, 128) um aufliegende, um eingegrabene oder um freiliegende, insbesondere unterspülte, Abschnitte (124, 126, 128) des Objekts (110) handelt.

4. Unbemanntes Unterwasserfahrzeug nach einem der vorherigen Ansprüche, **gekennzeichnet durch**
Navigationsmittel (6) zum Bereitstellen von Navigationsdaten zum selbstständigen Navigieren (232) des Unterwasserfahrzeugs (2), zum Ermitteln (180) der jeweiligen Position des jeweils lokalisierten Abschnitts (124, 126, 128) des Objekts (110) und zum Zuordnen (182) dieser Navigationsdaten und/oder der Messdaten zu dieser jeweiligen Position mit mehreren oder allen der folgenden Navigationseinrichtungen (70 - 94) zum Ermitteln der Navigationsdaten:
- einem Stampfsensor (70) zum Ermitteln der Rotationsbewegung des Unterwasserfahrzeugs (2) um seine Querachse,
- einem Rollsensor (72) zum Ermitteln der Rotationsbewegung des Unterwasserfahrzeugs (2) um seine Längsachse,
- einem Magnetkompass (74) zum Ermitteln der Richtung und Orientierung des Unterwasserfahrzeugs (2) relativ zu den Feldlinien des Erdmagnetfelds,
- ein Echolot (78) zum Ermitteln der Wassertiefe unter dem Unterwasserfahrzeug (2),
- einem Dosenbarometer (76) zum Ermitteln des Wasserdrucks in der Tiefe des Unterwasserfahrzeugs (2) unter der Wasseroberfläche (134) zum Ermitteln dieser Tiefe anhand des ermittelten Wasserdrucks,
- einer Einrichtung (80) eines sog. "Ultra Short Baseline" Unterwassernavigationssystems zur Positionsbestimmung anhand von Laufzeitmessungen von Unterwasserschallsignalen zu mehreren weiteren Einrichtungen im Wasser,
- einem Wasserschallgeschwindigkeitssensor zum Ermitteln der Schallgeschwindigkeit im Wasser,
- einem Transponder (82) als Einrichtung zum Senden von Signalen in Erwiderung auf das Empfangen von Signalen,
- einem Responder (84) als Einrichtung zum Senden von Signalen in Erwiderung auf das Empfangen von Signalen,
- einem Ultraschall-Doppler-Profil-Strömungsmesser (86) zum Ermitteln der Wasserströmung relativ zum Unterwasserfahrzeug (2),
- wenigstens einem Beschleunigungssensor (88) zum Ermitteln der Beschleunigung des Unterwasserfahrzeugs (2) in einem inertialen Bezugssystem,
- einer Messsonde (90) zum Ermitteln des Salzgehalts und der Temperatur des umgebenden Wassers und zum Ermitteln der Tiefe der Messsonde (90) unter der Wasseroberfläche (134),
- einer Empfangseinrichtung (92) zum Empfangen von Satellitensignalen eines satellitengestützten Navigationssystems, insbesondere des Global Positioning Systems (GPS), und zum Ermitteln der Position (138) des Unterwasserfahrzeugs (2) mittels dieser Satellitensignale,
- einem Trübungssensor (94) zum Ermitteln der Trübung des umgebenden Wassers zur Berücksichtigung bei der Verwendung weiterer Messergebnisse.

5. Unbemanntes Unterwasserfahrzeug nach einem der vorherigen Ansprüche,
**dadurch gekennzeichnet, dass**
das 3D-Untergrundsonar (22) mehrere, insbesondere in Reihe angeordnete, Wasserschallwandler (24) als physikalische Apertur und eine synthetische Apertur (68) zum Aufspannen einer das räumliche Lokalisieren (156) des Objekts (110) ermöglichenden Beobachtungsfläche mittels wiederholt ermittelter Messdaten der Wasserschallwandler (24) aufweist, wobei das Unterwasserfahrzeug (2) wenigstens einen gegenüber der Längsachse des Unterwasserfahrzeugs (2) schwenkbaren Sensorträger (26, 28) aufweist, an dem die Wasserschallwandler (24) zumindest in ihrer Mehrzahl in mehreren unterschiedlichen Abständen jeweils gegenüber einem Bezugspunkt auf der Längsachse, insbesondere gegenüber der jeweiligen Schwenkachse, befestigt sind, wobei die diese Messdaten ermittelnden Wasserschallumwandler (24) derart symmetrisch bezogen auf die Längsachse des Unterwasserfahrzeugs (2) angeordnet sind, dass die Mitte eines mittels diesen Messdaten abtastbaren Abtastbereichs einen Querversatz, vorzugsweise von wenigstens einem halben Meter, zur Längsachse des Unterwasserfahrzeugs (2) aufweist.

6. Unbemanntes Unterwasserfahrzeug nach einem der vorherigen Ansprüche,
**gekennzeichnet durch**
eine Steuereinrichtung (64) mit Mitteln zum Manövrieren (224) des Unterwasserfahrzeugs (2) in eine durch eine Abtauchposition (146) definierte Operationstiefe (140), Mitteln zum Manövrieren (232) des Unterwasserfahrzeugs (2) nach Erreichen der Operationstiefe (140) zur Abtauchposition (146), Mitteln zum Durchführen (242) einer Suchroutine nach Erreichen der Abtauchposition (146), wobei verfügbares Vorwissen über die Lage des Objekts (110) von der Suchroutine berücksichtigt wird, Mitteln zum Berechnen (246) und Abfahren (248) einer Anfahrtrajektorie (150) zu einer in Abhängigkeit von der ermittelten Lage des Objekts (110) definierten Startposition (152) und Mitteln zum Folgen (254) der über einem ermittelten Objektverlauf liegenden Trajektorie (108).

7. System mit einem autonomen Unterwasserfahrzeug nach einer der vorherigen Ansprüchen, **gekennzeichnet durch**
eine Missionsplanungseinrichtung (56) zum Erzeugen (200) von Steuerdaten zur Steuerung der Mission, eine Steuerdatenübertragungseinrichtung (58) zum Übertragen (202) der Steuerdaten von der Missionsplanungseinrichtung (56) zum Unterwasserfahrzeug (2), eine Messdatenausleseeinrichtung (60) zum Auslesen von während der Mission gespeicherten Messdaten (218) und eine Messdatenauswerteeinrichtung (62) zum Klassifizieren von Abschnitten (124, 126, 128) des Objekts (110) als aufliegende, eingegrabene oder freiliegende Abschnitte (124, 126, 128) und/oder zum Bestimmen des Zustands des Objekts (110).

8. Verfahren zum Lokalisieren (156) und Untersuchen (158) eines am Gewässergrund (114) eines Gewässers (116) angeordneten Objekts (110) mittels eines unbemannten Unterwasserfahrzeugs (2), welches Objektlokalisierungsmittel (10) aufweist, die das Objekt (110) lokalisieren (156), und welches Objektuntersuchungsmittel (12) aufweist, die das Objekt (110) untersuchen (158), wobei
eine Sonareinrichtung (20) Messdaten sammelt (160) und die Objektlokalisierungsmittel (10) lokale Abschnitte (124, 126, 128) des Objekts (110) mittels dieser Messdaten räumlich akustisch lokalisieren (166), während sich das Unterwasserfahrzeug (2) über diese lokalen Abschnitte des Objekts (110) hinwegbewegt und zugleich die Objektuntersuchungsmittel (12) diese oder benachbarte lokale Abschnitte (124, 126, 128) des Objekts (110) untersuchen (168), unabhängig davon, ob diese lokalen Abschnitte (124, 126, 128) über oder unter der Gewässergrundoberfläche (112) angeordnet sind und Objektverlauferkennungsmittel (14) mittels der lokalisierten Abschnitte (124, 126, 128) den lokalen Objektverlauf des Objekts (110) unabhängig davon erkennen (170), ob die lokalisierten Abschnitte (124, 126, 128) aufliegend, eingegraben oder freiliegend sind, wobei Objektverlaufverfolgungsmittel (16) die Trajektorie (108) des Unterwasserfahrzeugs (2) mittels des erkannten Objektverlaufs derart anpassen, dass ein Querversatz der Trajektorie (108) relativ zum erkannten Objektverlauf möglichst gering und/oder möglichst konstant gehalten wird, und dass die Sonareinrichtung (20) ein 3D-Untergrundsonar (22) aufweist.

9. Verfahren nach Anspruch 8,
**dadurch gekennzeichnet, dass**
ein Multisensorsystem (8) mit dem 3D-Untergrundsonar (22) Messdaten von wenigstens zwei Sensoren (38 - 48) miteinander verknüpft und mittels der verknüpften Messdaten das Objekt lokalisiert (156) und/oder untersucht (158) wird, wobei zwei, mehr als zwei oder alle der folgenden Sensoren die Messdaten zum Verknüpfen (164) dieser Messdaten miteinander bereitstellen (162):
- das 3D-Untergrundsonar (22),
- wenigstens eine Kamera (48),
- ein Seitensichtsonar (46),
- ein Mehrstrahlsonar (42),
- ein Frontsichtsonar (44),
- wenigsten ein Magnetsensor (38) einer Magnetfelddetektionseinrichtung.

10. Verfahren nach Anspruch 9,
**dadurch gekennzeichnet, dass**
das Multisensorsystem (8) Messdaten sammelt (160) und mittels der Messdaten die lokale Gewässergrundoberfläche unter dem Unterwasserfahrzeug (2) vermisst (176) und die Lage der lokalisierten Abschnitte des Objekts (110) relativ zur lokalen Gewässergrundoberfläche erkannt (184) wird und mittels der erkannten Lage klassifiziert (186) wird, ob es sich bei den lokalen Abschnitten (124, 126, 128) um aufliegende, eingegrabene oder freiliegende, insbesondere unterspülte, Abschnitte (124, 126, 128) des Objekts (110) handelt.

11. Verfahren nach einem der Ansprüche 8 bis 10,
**dadurch gekennzeichnet, dass**
das Unterwasserfahrzeug (2) mittels Navigationsdaten, die von Navigationsmitteln (6) bereitgestellt werden, selbstständig navigiert (232), die jeweilige Position des jeweils lokalisierten Abschnitts (124, 126, 128) des Objekts (110) ermittelt (180) wird und diese Navigationsdaten und/oder die Messdaten zu dieser jeweiligen Position (182) zugeordnet werden, wobei die Navigationsdaten dadurch ermittelt werden, dass
- ein Stampfsensor (70) die Rotationsbewegung des Unterwasserfahrzeugs (2) um seine Querachse ermittelt und/oder
- ein Rollsensor (72) die Rotationsbewegung des Unterwasserfahrzeugs (2) um seine Längsachse ermittelt und/oder
- ein Magnetkompass (74) die Richtung und Orientierung des Unterwasserfahrzeugs (2) relativ zu den Feldlinien des Erdmagnetfelds ermittelt und/oder
- ein Echolot (78) die Wassertiefe unter dem Unterwasserfahrzeug (2) ermittelt und/oder
- ein Dosenbarometer (76) den Wasserdruck in der Tiefe des Unterwasserfahrzeugs unter der Wasseroberfläche (134) ermittelt und diese Tiefe anhand dieses Wasserdrucks ermittelt wird und/oder
- eine Einrichtung (80) eines sog. "Ultra Short Baseline" Unterwassernavigationssystems zusammen mit mehreren weiteren Einrichtungen Laufzeitmessungen zwischen diesen Einrichtungen durchführt und zur Positionsbestimmung heranzieht und/oder
- ein Wasserschallgeschwindigkeitssensor die Schallgeschwindigkeit im Wasser ermittelt und/oder
- ein "Transponder" (82) als Einrichtung Signale empfängt und in Erwiderung darauf Signale sendet und/oder
- ein "Responder" (84) als Einrichtung Signale empfängt und in Erwiderung darauf Signale sendet und/oder
- ein Ultraschall-Doppler-Profil-Strömungsmesser (86) die Wasserströmung relativ zum Unterwasserfahrzeug ermittelt und/oder
- Beschleunigungssensoren (88) die Beschleunigung des Unterwasserfahrzeugs (2) in einem inertialen Bezugssystem ermitteln und/oder
- eine Messsonde (90) den Salzgehalt und die Temperatur des umgebenden Wassers und die Tiefe der Messsonde unter der Wasseroberfläche (134) ermittelt und/oder
- eine Empfangseinrichtung (92) Satellitensignale eines satellitengestützten Navigationssystems, insbesondere des Global Positioning Systems (GPS), empfängt und die Position des Unterwasserfahrzeugs (2) mittels dieser Signale ermittelt und/oder
- ein Trübungssensor (94) die Trübung des umgebenden Wassers zur Berücksichtigung bei der Verwendung mehrerer Navigationsdaten ermittelt.

12. Verfahren nach einem der Ansprüche 8 bis 11,
**dadurch gekennzeichnet, dass**
das Objekt (110) mittels des 30-Untergrundsonars (22) räumlich lokalisiert (156) wird, wobei das Unterwasserfahrzeug (2) wenigstens einen Sensorträger (26, 28) gegenüber der Längsachse des Unterwasserfahrzeugs (2) schwenkt (238) und nachfolgend mehrere, insbesondere in Reihe, in mehreren unterschiedlichen Abständen jeweils gegenüber einen Bezugspunkt auf der Längsachse, insbesondere gegenüber der jeweiligen Schwenkachse, zumindest in ihrer Mehrzahl am Sensorträger (26, 28), angeordnete Wasserschallwandler (24) wiederholt Messdaten ermitteln und mittels einer synthetischen Apertur (68) eine die räumliche Lokalisierung (156) des Objekts (110) ermöglichende Beobachtungsfläche aufspannen, wobei der Sensorträger derart schwenkt (238), dass die Wasserschallwandler (24) zum Ermitteln der Messdaten (160) asymmetrisch bezogen auf die Längsachse des Unterwasserfahrzeugs (2) angeordnet worden, und diese Wasserschallwandler (24) nachfolgend einen Abtastbereich abtasten, dessen Mitte einen Querversatz, vorzugsweise von wenigstens einem Meter, zur Längsachse des Unterwasserfahrzeugs (2) aufweist.

13. Verfahren nach einem der Ansprüche 8 bis 12,
**dadurch gekennzeichnet, dass** zur Missionsvorbereitung (190) mittels einer Missionsplanungseinrichtung (56) eine Mission geplant wird, Vorwissen über die Lage des Objekts (110), falls dieses Vorwissen verfügbar ist, dabei berücksichtigt wird und für die Durchführung (192) der Mission geeignete Steuerdaten erzeugt (200) und an das Unterwasserfahrzeug (2) übermittelt (202) werden, nachfolgend das Unterwasserfahrzeug (2) im Wasser selbstständig navigierend (226) ein Abtauchmanöver durchführt (206), wobei
- das Unterwasserfahrzeug (2) in eine durch eine Abtauchposition (146) definierte Operationstiefe (140) manövriert und dabei wiederholt die Position (154) des Unterwasserfahrzeugs, insbesondere mittels des sog. "Ultra Short Baseline"-Systems, ermittelt und zusätzlich ein Oberflächenschiff wiederholt die Position des Unterwasserfahrzeugs (2) ermittelt und an das Unterwasserfahrzeug (2) übermittelt (226), und
- das Unterwasserfahrzeug (2) nach Erreichen der Operationstiefe (140) ein sog. "Navigations-Alignment-Navigationsmanöver" zum Erreichen der Abtauchposition (146) durchführt (232),
nachfolgend das Unterwasserfahrzeug (2) eine Suchroutine durchführt (242), wobei das Unterwasserfahrzeug (2), falls Vorwissen über die Lage des Objekts (110) verfügbar ist, dieses Vorwissen berücksichtigt, und nach dem Auffinden des Objekts (110) eine Anfahrtrajektorie (150) zu einer Startposition (152) berechnet (246) und abfährt (248),
nachfolgend das Unterwasserfahrzeug (2) den lokalen Objektverlauf ermittelt, dem Objektverlauf auf seiner darüberliegenden Trajektorie (108) folgt (254), dabei das Objekt (110) untersucht (158) und dabei sensierte Messdaten in einem Speicher ablegt und nachfolgend die im Speicher abgelegten Messdaten ausgelesen (218) und ausgewertet (220) werden, wobei klassifiziert (186) wird, ob Abschnitte (124, 126, 128) des Objekts (110) aufliegende, eingegrabene oder freiliegende, insbesondere unterspülte, Abschnitte (124, 126. 128) sind und/oder wobei der Zustand des Objekts (110) bestimmt wird.

## Claims

1. Unmanned underwater vehicle for locating (156) and examining (158) an object (110) arranged on the bottom (114) of a body of water (116) using object location means (110) to locate (156) the object (110) and using object examination means (12) to examine (158) the object (110), wherein
the autonomous underwater vehicle comprises a sonar device (20) for collecting (160) measurement data and the object location means (10) are designed to acoustically spatially locate (166) local sections (124, 126, 128) of the object (110) that are arranged both above and below the surface (112) of the bottom of the body of water by means of these measurement data while the underwater vehicle (110) simultaneously moves over these local sections (124, 126, 128) to examine (168) these or adjacent local sections (124, 126, 128) of the object (110) by means of the object examination means (12), and
object profile detection means (14) are configured to detect (170) the local object profile of the object (110) by means of the located local sections (124, 126, 128) regardless of whether these local sections (124, 126, 128) are lying on top, buried or exposed, **characterized in that** object profile tracking means (16) are configured to adapt to a trajectory (108) of the underwater vehicle (2) by means of the detected object profile such that a transverse offset of the trajectory (108) relative to the detected object profile is kept as small as possible and/or as constant as possible, and **in that** the sonar device (20) comprises a 3D underground sonar (22).

2. Unmanned underwater vehicle according to Claim 1, **characterized by** a multisensor system (8) having the 3D underground sonar (22) and having one, more or all of the following sensors (38 - 48) to collect (160) measurement data and to locate (156) and/or to examine (158) the object (110) by means of these sensors (38 - 48) :
- at least one camera (48),
- a side view sonar (46),
- a multibeam sonar (42),
- a front view sonar (44),
- at least one magnetic sensor (38) of a magnetic field detection device (40).

3. Unmanned underwater vehicle according to Claim 2,
**characterized by**
a design of the multisensor system (8) to collect (160) measurement data suitable for surveying (176) the local surface (112) of the bottom of the body of water below the underwater vehicle (2), to detect (184) the orientation of the detected local sections (124, 126, 128) of the object (110) relative to the local surface (112) of the bottom of the body of water and to use the detected orientation to classify (186) whether the local sections (124, 126, 128) are sections (124, 126, 128) of the object (110) that are lying on top, buried or exposed, in particular washed out.

4. Unmanned underwater vehicle according to one of the preceding claims,
**characterized by**
navigation means (6) for providing navigation data for independently navigating (232) the underwater vehicle (2), for ascertaining (180) the respective position of the respectively located section (124, 126, 128) of the object (110) and for associating (182) these navigation data and/or the measurement data with this respective position using multiple or all of the following navigation devices (70-94) to ascertain the navigation data:
- a pitch sensor (70) to ascertain the rotational movement of the underwater vehicle (2) about its transverse axis,
- a roll sensor (72) to ascertain the rotational movement of the underwater vehicle (2) about its longitudinal axis,
- a magnetic compass (74) to ascertain the direction and orientation of the underwater vehicle (2) relative to the field lines of the earth's magnetic field,
- an echo sounder (78) to ascertain the depth of water below the underwater vehicle (2),
- an aneroid barometer (76) to ascertain the water pressure at the depth of the underwater vehicle (2) below the water surface (134) to ascertain its depth on the basis of the ascertained water pressure,
- a device (80) of what is known as an "Ultra Short Baseline" underwater navigation system to determine the position on the basis of propagation time measurements for underwater sound signals to multiple further devices in the water,
- a waterborne sound speed sensor to ascertain the speed of sound in the water,
- a transponder (82) as a device to send signals in response to the receiving of signals,
- a responder (84) as a device to send signals in response to the receiving of signals,
- an ultrasonic Doppler profile flowmeter (86) to ascertain the flow of water relative to the underwater vehicle (2),
- at least one acceleration sensor (88) to ascertain the acceleration of the underwater vehicle (2) in an inertial reference system,
- a measurement probe (90) to ascertain the salt content and the temperature of surrounding water and to ascertain the depth of the measurement probe (90) below the water surface (134),
- a reception device (92) to receive satellite signals of a satellite-assisted navigation system, in particular of the global positioning system (GPS), and to ascertain the position (138) of the underwater vehicle (2) by means of these satellite signals,
- a turbidity sensor (94) to ascertain the turbidity of the surrounding water to take it into consideration when using further measurement results.

5. Unmanned underwater vehicle according to one of the preceding claims,
**characterized in that**
the 3D underground sonar (22) comprises multiple waterborne sound transducers (24), in particular arranged in series, as a physical aperture and a synthetic aperture (68) to span an observation surface, allowing spatial locating (156) of the object (110), by means of repeatedly ascertained measurement data of the waterborne sound transducers (24), wherein the underwater vehicle (2) comprises at least one sensor support (26, 28), swivellable relative to the longitudinal axis of the underwater vehicle (2), on which the waterborne sound transducers (24) are mounted, at least in their plurality, at multiple different distances in each case relative to a reference point on the longitudinal axis, in particular relative to the respective swivel axis, wherein the waterborne sound transducers (24) ascertaining these measurement data are arranged symmetrically about the longitudinal axis of the underwater vehicle (2) such that the middle of a scan area scannable by means of these measurement data comprises a transverse offset, preferably of at least half a metre, from the longitudinal axis of the underwater vehicle (2).

6. Unmanned underwater vehicle according to one of the preceding claims,
**characterized by**
a control device (64) having means to manoeuvre (224) the underwater vehicle (2) into an operating depth (140) defined by a dive position (146), means to manoeuvre (232) the underwater vehicle (2) to the dive position (146) after reaching the operating depth (140), means to perform (242) a search routine after reaching the dive position (146), wherein available prior knowledge about the orientation of the object (110) is taken into consideration by the search routine, means to calculate (246) and travel along (248) an approach trajectory (150) to a starting position (152) defined on the basis of the ascertained orientation of the object (110) and means to follow (254) the trajectory (108) situated above an ascertained object profile.

7. System having an autonomous underwater vehicle according to one of the preceding claims, **characterized by**
a mission planning device (56) to produce (200) control data for controlling the mission, a control data transmission device (58) to transmit (202) the control data from the mission planning device (56) to the underwater vehicle (2), a measurement data reading device (60) to read measurement data (218) stored during the mission and a measurement data evaluation device (62) to classify sections (124, 126, 128) of the object (110) as sections (124, 126, 128) that are lying on top, buried or exposed and/or to determine the state of the object (110).

8. Method for locating (156) and examining (158) an object (110) arranged on the bottom (114) of a body of water (116) by means of an unmanned underwater vehicle (2) that comprises object location means (10) that locate (156) the object (110) and that comprises object examination means (12) that examine (158) the object (110), wherein
a sonar device (20) collects (160) measurement data and the object location means (10) acoustically spatially locate (166) local sections (124, 126, 128) of the object (110) by means of these measurement data while the underwater vehicle (2) moves over these local sections of the object (110) and simultaneously the object examination means (12) examine (168) these or adjacent local sections (124, 126, 128) of the object (110) regardless of whether these local sections (124, 126, 128) are arranged above or below the surface (112) of the body of water, and
object profile detection means (14) detect (170) the local object profile of the object (110) by means of the located sections (124, 126, 128) regardless of whether the located sections (124, 126, 128) are lying on top, buried or exposed, wherein object profile tracking means (16) adapt the trajectory (108) of the underwater vehicle (2) by means of the detected object profile such that a transverse offset of the trajectory (108) relative to the detected object profile is kept as small as possible and/or as constant as possible, and wherein the sonar device (20) comprises a 3D underground sonar (22).

9. Method according to Claim 8,
**characterized in that**
a multisensor system (8) uses the 3D underground sonar (22) to combine measurement data from at least two sensors (38 - 48) with one another and the object is located (156) and/or examined (158) by means of the combined measurement data, wherein two, more than two or all of the following sensors provide (162) the measurement data to combine (164) these measurement data with one another:
- the 3D underground sonar (22),
- at least one camera (48),
- a side view sonar (46),
- a multibeam sonar (42),
- a front view sonar (44),
- at least one magnetic sensor (38) of a magnetic field detection device.

10. Method according to Claim 9,
**characterized in that**
the multisensor system (8) collects (160) measurement data and surveys (176) the local surface of the bottom of the body of water below the underwater vehicle (2) by means of the measurement data, and the orientation of the located sections of the object (110) relative to the local surface at the bottom of the body of water is detected (184) and the detected orientation is used to classify (186) whether the local sections (124, 126, 128) are sections (124, 126, 128) of the object (110) that are lying on top, buried or exposed, in particular washed out.

11. Method according to one of Claims 8 to 10,
**characterized in that**
the underwater vehicle (2) navigates (232) independently by means of navigation data provided by navigation means (6), the respective position of the respectively located section (124, 126, 128) of the object (110) is ascertained (180) and these navigation data and/or measurement data are associated with this respective position (182), the navigation data being ascertained by virtue of
- a pitch sensor (70) ascertaining the rotational movement of the underwater vehicle (2) about its transverse axis and/or
- a roll sensor (72) ascertaining the rotational movement of the underwater vehicle (2) about its longitudinal axis and/or
- a magnetic compass (74) ascertaining the direction and orientation of the underwater vehicle (2) relative to the field lines of the earth's magnetic field and/or
- an echo sounder (78) ascertaining the depth of water below the underwater vehicle (2) and/or
- an aneroid barometer (76) ascertaining the water pressure at the depth of the underwater vehicle below the water surface (134) and this depth being ascertained on the basis of this water pressure and/or
- a device (80) of what is known as an "Ultra Short Baseline" underwater navigation system, together with multiple further devices, performing propagation time measurements between these devices and using said propagation time measurements for position determination and/or
- a waterborne sound speed sensor ascertaining the speed of sound in the water and/or
- a "transponder" (82) receiving signals as a device and sending signals in response thereto and/or
- a "responder" (84) receiving signals as a device and sending signals in response thereto and/or
- an ultrasonic Doppler profile flowmeter (86) ascertaining the flow of water relative to the underwater vehicle and/or
- acceleration sensors (88) ascertaining the acceleration of the underwater vehicle (2) in an inertial reference system and/or
- a measurement probe (90) ascertaining the salt content and the temperature of the surrounding water and the depth of the measurement probe below the water surface (134) and/or
- a reception device (92) receiving satellite signals of a satellite assisted navigation system, in particular of the global positioning system (GPS), and ascertaining the position of the underwater vehicle (2) by means of these signals and/or
- a turbidity sensor (94) ascertaining the turbidity of the surrounding water to be taken into consideration when using multiple navigation data.

12. Method according to one of Claims 8 to 11,
**characterized in that**
the object (110) is spatially located (156) by means of the 3D underground sonar (22), wherein the underwater vehicle (2) swivels (238) at least one sensor support (26, 28) relative to the longitudinal axis of the underwater vehicle (2) and subsequently multiple waterborne sound transducers (24), arranged, at least in their plurality, on the sensor support (26, 28), in particular in series, at multiple different distances in each case relative to a reference point on the longitudinal axis, in particular relative to the respective swivel axis, repeatedly ascertain measurement data and use a synthetic aperture (68) to span an observation surface allowing spatial locating (156) of the object (110), wherein the sensor support swivels (238) such that the waterborne sound transducers (24), to ascertain the measurement data (160), are arranged asymmetrically about the longitudinal axis of the underwater vehicle (2), and these waterborne sound transducers (24) subsequently scan a scan area whose middle comprises a transverse offset, preferably of at least one metre, from the longitudinal axis of the underwater vehicle (2).

13. Method according to one of Claims 8 to 12,
**characterized in that**
mission preparation (190) involves a mission planning device (56) being used to plan a mission, prior knowledge about the orientation of the object (110), if this prior knowledge is available, being taken into consideration for this and control data suitable for performing (192) the mission being produced (200) and transmitted (202) to the underwater vehicle (2), and the underwater vehicle (2) subsequently performing (206) a dive manoeuvre in the water under independent navigation (226), wherein
- the underwater vehicle (2) manoeuvres into an operating depth (140) defined by a dive position (146) and in the process repeatedly ascertains the position (154) of the underwater vehicle, in particular by means of what is known as the "ultrashort baseline" system, and additionally a surface ship repeatedly ascertains the position of the underwater vehicle (2) and transmits (226) it to the underwater vehicle (2), and
- the underwater vehicle (2), after reaching the operating depth (140), performs (232) what is known as a "navigation alignment navigation manoeuvre" to reach the dive position (146),
subsequently the underwater vehicle (2) performs (242) a search routine, wherein, if prior knowledge about the orientation of the object (110) is available, the underwater vehicle (2) takes this prior knowledge into consideration and, after finding the object (110), calculates (246) and travels along (248) an approach trajectory (150) to a starting position (152),
subsequently the underwater vehicle (2) ascertains the local object profile, follows (254) the object profile on its trajectory (108) above said object profile, examines (158) the object (110) in the process and stores measurement data sensed in the process in a memory and subsequently the measurement data stored in the memory are read (218) and evaluated (220), wherein classification (186) of whether sections (124, 126, 128) of the object (110) are sections (124, 126, 128) that are lying on top, buried or exposed, in particular washed out, is performed and/or wherein the state of the object (110) is determined.

## Revendications

1. Véhicule sous-marin sans pilote pour la localisation (156) et l'examen (156) d'un objet (110) disposé sur le fond de milieu aquatique (114) d'un milieu aquatique (116), comprenant des moyens de localisation d'objet (110) destinés à la localisation (156) de l'objet (110) et comprenant des moyens d'examen d'objet (12) destinés à l'examen (158) de l'objet (110),
le véhicule sous-marin autonome possédant un dispositif sonar (20) destiné à collecter (160) des données de mesure et les moyens de localisation d'objet (10) étant configurés pour la localisation acoustique (166) dans l'espace de portions locales (124, 126, 128) de l'objet (110) qui sont disposées aussi bien au-dessus qu'au-dessous de la surface du fond de milieu aquatique (112) au moyen de ces données de mesure, pendant que le véhicule sous-marin (110) se déplace en même temps au-dessus de ces portions locales (124, 126, 128) en vue d'examiner (168) ces portions locales (124, 126, 128) ou des portions voisines de l'objet (110) à l'aide des moyens d'examen d'objet (12), et
des moyens de reconnaissance de tracé d'objet (14) destinés à reconnaître (170) le tracé d'objet local de l'objet (110) au moyen des portions locales (124, 126, 128) localisées étant conçus indépendamment du fait que ces portions locales (124, 126, 128) sont couchées, enterrées ou découvertes, **caractérisé en ce que** des moyens de suivi du tracé d'objet (16) destinés à adapter une trajectoire (108) du véhicule sous-marin (2) au moyen du tracé d'objet reconnu sont conçus de telle sorte qu'un décalage transversal de la trajectoire (108) par rapport au tracé d'objet reconnu est maintenu aussi faible que possible et/ou si possible constant, et **en ce que** le dispositif sonar (20) possède un radar à pénétration de sol 3D (22).

2. Véhicule sous-marin sans pilote selon la revendication 1, **caractérisé par** un système à capteurs multiples (8) comprenant le radar à pénétration de sol 3D (22) et comprenant l'un, plusieurs ou la totalité des capteurs (38 - 48) suivants pour la collecte (160) de données de mesure ainsi que pour la localisation (156) et/ou l'examen (158) de l'objet (110) au moyen de ces capteurs (38 - 48) :
- au moins une caméra (48),
- un sonar à vision latérale (46),
- un sonar à faisceaux multiples (42),
- un sonar à vision frontale (44),
- au moins un capteur magnétique (38) d'un dispositif de détection de champ magnétique (40).

3. Véhicule sous-marin sans pilote selon la revendication 2, **caractérisé par** une configuration du système à capteurs multiples (8) destiné à collecter (160) des données de mesure qui est adaptée pour mesurer (176) le fond de milieu aquatique (112) local sous le véhicule sous-marin (2), pour reconnaître (184) la position des portions locales (124, 126, 128) détectées de l'objet (110) par rapport au fond de milieu aquatique (112) local et pour classifier (186), au moyen de la position reconnue, si les portions locales (124, 126, 128) sont des portions locales (124, 126, 128) de l'objet (110) qui sont couchées, enterrées ou découvertes, notamment affouillées.

4. Véhicule sous-marin sans pilote selon l'une des revendications précédentes, **caractérisé par** des moyens de navigation (6) destinés à fournir des données de navigation servant à la navigation autonome (232) du véhicule sous-marin (2), à déterminer (180) la position respective de la portion (124, 126, 128) respectivement localisée de l'objet (110) et à associer (182) ces données de navigation et/ou les données de mesure à cette position respective, comprenant plusieurs ou la totalité des dispositifs de navigation (70 - 94) suivants servant à déterminer les données de navigation :
- un capteur de tangage (70) destiné à déterminer le mouvement de rotation du véhicule sous-marin (2) autour de son axe transversal,
- un capteur de roulis (72) destiné à déterminer le mouvement de rotation du véhicule sous-marin (2) autour de son axe longitudinal,
- un compas magnétique (74) destiné à déterminer la direction et l'orientation du véhicule sous-marin (2) par rapport aux lignes de champ du champ magnétique terrestre,
- un échosondeur (78) destiné à déterminer la profondeur de l'eau sous le véhicule sous-marin (2),
- un baromètre anéroïde (76) destiné à déterminer la pression de l'eau à la profondeur du véhicule sous-marin (2) sous la surface de l'eau (134) en vue de déterminer cette profondeur à l'aide de la pression d'eau déterminée,
- un dispositif (80) d'un système de navigation sous-marine dit « à base ultra-courte » (USBL) destiné à définir la position à l'aide de mesures du temps de propagation de signaux sonores sous-marins par rapport à plusieurs autres dispositifs dans l'eau,
- un capteur de vitesse du son dans l'eau destiné à déterminer la vitesse du son dans l'eau,
- un transpondeur (82) en tant que dispositif destiné à émettre des signaux en réplique à la réception de signaux,
- un répondeur (84) en tant que dispositif destiné à émettre des signaux en réplique à la réception de signaux,
- un fluxmètre à profil Doppler à ultrasons (86) destiné à déterminer le flux de l'eau par rapport au véhicule sous-marin (2),
- au moins un capteur d'accélération (88) destiné à déterminer l'accélération du véhicule sous-marin (2) dans un système de référence inertiel,
- une sonde de mesure (90) destinée à déterminer la teneur en sel et la température de l'eau environnante et à déterminer la profondeur de la sonde de mesure (90) sous la surface de l'eau (134),
- un dispositif de réception (92) destiné à recevoir des signaux de satellite d'un système de navigation assisté par satellite, notamment du système mondial de radiorepérage (GPS), et à déterminer la position (138) du véhicule sous-marin (2) au moyen de ces signaux de satellite,
- un capteur de turbidité (94) destiné à déterminer la turbidité de l'eau environnante à prendre en compte lors de l'utilisation des autres résultats de mesure.

5. Véhicule sous-marin sans pilote selon l'une des revendications précédentes, **caractérisé en ce que** le radar à pénétration de sol 3D (22) possède plusieurs transducteurs acoustiques sous-marins (24), notamment disposés en série, faisant office d'ouverture physique et une ouverture synthétique (68) servant à couvrir une surface d'observation qui rend possible la localisation (156) de l'objet (110) dans l'espace au moyen des données de mesure déterminées de manière répétée des transducteurs acoustiques sous-marins (24), le véhicule sous-marin (2) possédant au moins un porte-capteur (26, 28) pivotant par rapport à l'axe longitudinal du véhicule sous-marin (2), auquel sont fixés les transducteurs acoustiques sous-marins (24) au moins dans leur pluralité dans plusieurs écarts différents respectivement par rapport à un point de référence sur l'axe longitudinal, notamment par rapport à l'axe de pivotement correspondant, les transducteurs acoustiques sous-marins (24) qui déterminent ces données de mesure étant disposés symétriquement par rapport à l'axe longitudinal du véhicule sous-marin (2) de telle sorte que le centre d'une zone de balayage qui peut être balayée au moyen de ces données de mesure présente un décalage transversal, de préférence d'au moins un demi mètre, par rapport à l'axe longitudinal du véhicule sous-marin (2).

6. Véhicule sous-marin sans pilote selon l'une des revendications précédentes, **caractérisé par**
un dispositif de commande (64) comprenant des moyens servant à manoeuvrer (224) le véhicule sous-marin (2) dans une profondeur d'opération (140) définie par une position de plongée (146), des moyens servant à manoeuvrer (232) le véhicule sous-marin (2) après avoir atteint la profondeur d'opération (140) vers la position de plongée (146), des moyens servant à exécuter (242) une routine de recherche après avoir atteint la position de plongée (146), des connaissances préalables disponibles à propos de la position de l'objet (110) étant prises en compte par la routine de recherche, des moyens servant calculer (246) et à parcourir (248) une trajectoire d'approche (150) vers une position de départ (152) définie en fonction de la position déterminée de l'objet (110) et des moyens servant à suivre (254) la trajectoire (108) se trouvant au-dessus d'un tracé d'objet déterminé.

7. Système comprenant un véhicule sous-marin autonome selon l'une des revendications précédentes,
**caractérisé par**
un dispositif de planification de mission (56) destiné à générer (200) des données de commande servant à commander la mission, un dispositif de transmission de données de commande (58) destiné à la transmission (202) des données de commande du dispositif de planification de mission (56) au véhicule sous-marin (2), un dispositif de lecture de données de mesure (56) destiné à la lecture des données de mesure (218) mémorisées pendant la mission et un dispositif d'interprétation des données de mesure (62) destiné à classifier des portions (124, 126, 128) de l'objet (110) comme étant des portions (124, 126, 128) couchées, enterrées ou découvertes et/ou à déterminer l'état de l'objet (110).

8. Procédé pour la localisation (156) et l'examen (156) d'un objet (110) disposé sur le fond de milieu aquatique (114) d'un milieu aquatique (116) au moyen d'un véhicule sous-marin (2) sans pilote, lequel possède des moyens de localisation d'objet (10) qui localisent (156) l'objet (110) et lequel possède des moyens d'examen d'objet (12) qui examinent (158) l'objet (110),
un dispositif sonar (20) collectant (160) des données de mesure et les moyens de localisation d'objet (10) effectuant une localisation acoustique (166) dans l'espace de portions locales (124, 126, 128) de l'objet (110) au moyen de ces données de mesure, pendant que le véhicule sous-marin (2) se déplace au-dessus de ces portions locales (124, 126, 128) et les moyens d'examen d'objet (12) examinent (168) en même temps ces portions locales (124, 126, 128) ou des portions voisines de l'objet (110), indépendamment du fait que ces portions locales (124, 126, 128) sont disposées au-dessus ou au-dessous de la surface du fond de milieu aquatique (112), et
des moyens de reconnaissance de tracé d'objet (14) qui reconnaissent (170) le tracé d'objet local de l'objet (110) au moyen des portions (124, 126, 128) localisées indépendamment du fait que les portions (124, 126, 128) localisées sont couchées, enterrées ou découvertes,
les moyens de suivi du tracé d'objet (16) adaptant la trajectoire (108) du véhicule sous-marin (2) au moyen du tracé d'objet reconnu de telle sorte qu'un décalage transversal de la trajectoire (108) par rapport au tracé d'objet reconnu est maintenu aussi faible que possible et/ou si possible constant, et le dispositif sonar (20) possédant un radar à pénétration de sol 3D (22) .

9. Procédé selon la revendication 8,
**caractérisé en ce que**
un système à capteurs multiples (8) comprenant le radar à pénétration de sol 3D (22) combine entre elles les données de mesure d'au moins deux capteurs (38 - 48) et l'objet est localisé (156) et/ou examiné (158) au moyen des données de mesure combinées, deux, plusieurs ou la totalité des capteurs suivants fournissant (162) les données de mesure en vue de combiner (164) des données de mesure entre elles :
- le radar à pénétration de sol 3D (22),
- au moins une caméra (48),
- un sonar à vision latérale (46),
- un sonar à faisceaux multiples (42),
- un sonar à vision frontale (44),
- au moins un capteur magnétique (38) d'un dispositif de détection de champ magnétique.

10. Procédé selon la revendication 9,
**caractérisé en ce que**
le système à capteurs multiples (8) collecte (160) des données de mesure et, au moyen de ces données de mesure, mesure (176) le fond de milieu aquatique local sous le véhicule sous-marin (2) et la position des portions localisées de l'objet (110) par rapport au fond de milieu aquatique local est reconnue et la position reconnue sert à classifier (186) si les portions locales (124, 126, 128) sont des portions locales (124, 126, 128) de l'objet (110) qui sont couchées, enterrées ou découvertes, notamment affouillées.

11. Procédé selon l'une des revendications 8 à 10,
**caractérisé en ce que**
me véhicule sous-marin (2) navigue (232) de manière autonome au moyen de données de navigation qui sont fournies par des moyens de navigation (6), la position respective de la portion (124, 126, 128) respectivement localisée de l'objet (110) est déterminée (180) et ces données de navigation et/ou les données de mesure sont associées à cette position (182) respective, les données de navigation étant déterminées par le fait que :
- un capteur de tangage (70) détermine le mouvement de rotation du véhicule sous-marin (2) autour de son axe transversal et/ou
- un capteur de roulis (72) détermine le mouvement de rotation du véhicule sous-marin (2) autour de son axe longitudinal et/ou
- un compas magnétique (74) détermine la direction et l'orientation du véhicule sous-marin (2) par rapport aux lignes de champ du champ magnétique terrestre et/ou
- un échosondeur (78) détermine la profondeur de l'eau sous le véhicule sous-marin (2) et/ou
- un baromètre anéroïde (76) détermine la pression de l'eau à la profondeur du véhicule sous-marin (2) sous la surface de l'eau (134) et cette profondeur est déterminée à l'aide de la pression d'eau déterminée et/ou
- un dispositif (80) d'un système de navigation sous-marine dit « à base ultra-courte » (USBL), en association avec plusieurs autres dispositifs, réalise des mesures du temps de propagation entre ces dispositifs et les utilise pour définit la position et/ou
- un capteur de vitesse du son dans l'eau détermine la vitesse du son dans l'eau et/ou
- un « transpondeur » (82) en tant que dispositif reçoit des signaux et, en réplique à ceux-ci, émet des signaux,
- un « répondeur » (84) en tant que dispositif reçoit des signaux et, en réplique à ceux-ci, émet des signaux et/ou
- un fluxmètre à profil Doppler à ultrasons (86) détermine le flux de l'eau par rapport au véhicule sous-marin et/ou
- des capteurs d'accélération (88) déterminent l'accélération du véhicule sous-marin (2) dans un système de référence inertiel et/ou
- une sonde de mesure (90) détermine la teneur en sel et la température de l'eau environnante ainsi que la profondeur de la sonde de mesure sous la surface de l'eau (134) et/ou
- un dispositif de réception (92) reçoit des signaux de satellite d'un système de navigation assisté par satellite, notamment du système mondial de radiorepérage (GPS), et détermine la position du véhicule sous-marin (2) au moyen de ces signaux de satellite et/ou
- un capteur de turbidité (94) détermine la turbidité de l'eau environnante à prendre en compte lors de l'utilisation de plusieurs données de navigation.

12. Procédé selon l'une des revendications 8 à 11,
**caractérisé en ce que**
l'objet (110) est localisé (156) dans l'espace au moyen du radar à pénétration de sol 3D (22), le véhicule sous-marin (2) faisant pivoter (238) au moins un porte-capteur (26, 28) par rapport à l'axe longitudinal du véhicule sous-marin (2) et ensuite plusieurs transducteurs acoustiques sous-marins (24) disposés au moins dans leur pluralité au niveau du porte-capteur (26, 28), notamment en série, dans plusieurs écarts différents respectivement par rapport à un point de référence sur l'axe longitudinal, notamment par rapport à l'axe de pivotement correspondant, déterminant de manière répétée des données de mesure et couvrant une surface d'observation qui rend possible la localisation (156) de l'objet (110) dans l'espace au moyen d'une ouverture synthétique (68), le porte-capteur (26, 28) pivotant (238) de telle sorte que les transducteurs acoustiques sous-marins (24) destinés à déterminer les valeurs de mesure (160) sont disposés de manière asymétrique en référence à l'axe longitudinal du véhicule sous-marin (2), et ces transducteurs acoustiques sous-marins (24) balayant ensuite une zone de balayage dont le centre présente un décalage transversal, de préférence d'au moins un mètre, par rapport à l'axe longitudinal du véhicule sous-marin (2) .

13. Procédé selon l'une des revendications 8 à 12, **caractérisé en ce qu'**en vue de la préparation de la mission (190), une mission est planifiée au moyen d'un dispositif de planification de mission (56), des connaissances préalables à propos de la position de l' objet (110) sont ici prises en compte dans le cas où ces connaissances préalables sont disponibles, et des données de commande appropriées pour l'exécution (192) de la mission sont générées (200) et communiquées (202) au véhicule sous-marin (2), le véhicule sous-marin (2) qui navigue (226) de manière autonome dans l'eau effectue (206) ensuite une manoeuvre de plongée (208),
- le véhicule sous-marin (2) manoeuvrant à une profondeur d'opération (140) définie par une position de plongée (146) et déterminant ici de manière répétée la position (154) du véhicule sous-marin, notamment au moyen du système dit « à base ultra-courte » (USBL), et en plus de cela un navire en surface déterminant de manière répétée la position du véhicule sous-marin (2) et la communiquant au véhicule sous-marin (2), et
- le véhicule sous-marin (2), après avoir atteint la profondeur d'opération (140), effectue (232) une manoeuvre dite de « navigation d'alignement de navigation » en vue d'attendre la position de plongée (146),
après quoi le véhicule sous-marin (2) exécute (242) une routine de recherche, le véhicule sous-marin (2), dans le cas où des connaissances préalables sont disponibles à propos de la position de l'objet (110), tient compte de ces connaissances préalables et, après avoir trouvé l'objet (110), calcule (246) et parcourt (248) une trajectoire d'approche (150) vers une position de départ (152)
après quoi le véhicule sous-marin (2) détermine le tracé d'objet local, suit (254) le tracé d'objet sur sa trajectoire (108) qui se trouve au-dessus, examine (158) ici l'objet (110) et stocke ici les données de mesure détectées dans une mémoire et les données de mesure stockées dans la mémoire sont ensuite lues (218) et interprétées (220), une classification (186) étant effectuée pour indiquer si les portions locales (124, 126, 128) sont des portions locales (124, 126, 128) de l'objet (110) sont couchées, enterrées ou découvertes, notamment affouillées et/ou l'état de l'objet (110) étant défini.
